# EUROPEAN PATENT APPLICATION

(11) **EP 4 831 620 A1**
(43) Date of publication of application: **28.10.2026**
(21) Application number: 24907562.3
(22) Date of filing: 20.12.2024
(51) Int. Cl.: G01N 21/64

(54) **FLUORESCENCE ENHANCER**

(30) Priority: 22.12.2023 JP 2023216872
(71) Applicant: AGC Inc., Chiyoda-ku Tokyo 100-8405 (JP); University of Miyazaki, Miyazaki-shi Miyazaki 889-2192 (JP)
(72) Inventor: OKAZOE Takashi, Tokyo 100-8405 (JP); OTA Yu, Tokyo 100-8405 (JP); KASHIWAGI Kimiaki, Tokyo 100-8405 (JP); XU Yan, Miyazaki-shi, Miyazaki 889-1692 (JP); IWAKIRI Rie, Miyazaki-shi, Miyazaki 889-1692 (JP)
(74) Representative: Müller-Boré & Partner Patentanwälte PartG mbB
(86) International application number: PCT/JP2024/045313
(87) International publication number: WO 2025/135179

(57) **Abstract**

The present invention provides: a protoporphyrin IX fluorescence enhancer comprising a nucleic acid having a G4 structure, the nucleic acid having the G4 structure being a nucleic acid that is bound to or complexed with a substance having cell membrane permeability; a method for producing a fluorine-containing G4 compound, in which an amidite derivative compound containing a fluorine-containing group and a nucleic acid having a guanine quadruplex structure are bound by a phosphoramidite method to synthesize a fluorine-containing G4 compound in which the nucleic acid having the guanine quadruplex structure and the fluorine-containing group are linked via a linking group; a medicinal composition having the fluorescence enhancer as an active ingredient; a cancer cell visualization kit containing the fluorescence enhancer and 5-aminolevulinic acid; and a cancer cell visualization method in which the fluorescence enhancer and 5-aminolevulinic acid are introduced into an in-vitro cancer cell.

## Description

### TECHNICAL FIELD

The present invention relates to protoporphyrin IX (PpIX) fluorescence enhancement technology that is useful in photodynamic diagnosis (PDD) using 5-aminolevulinic acid (5-ALA).

Priority is claimed on Japanese Patent Application No. 2023-216872, filed December 22, 2023, the content of which is incorporated herein by reference.

### BACKGROUND ART

In diagnostic imaging, including endoscopy, there is a strong need in clinical settings for techniques that can easily identify even very small lesions without oversight. Furthermore, in surgical procedures, visualizing cancerous sites can prevent the risk of incomplete removal. As a result, much research is being conducted into photodynamic diagnosis, which uses light to distinguish between tumors and normal tissue.

One example of a standard photosensitive substance used in photodynamic diagnoses is 5-ALA. The compound 5-ALA is a type of natural amino acid that exists naturally in the living bodies of animals and plants. When administered into the body, 5-ALA is taken up into cells, metabolized in the cytoplasm, and then metabolized to PpIX in the mitochondria. In normal cells, divalent iron is coordinated to PpIX by the iron-adding enzyme (ferrochelatase, FECH), ultimately resulting in the biosynthesis of heme, which is necessary for maintaining life activity. In contrast, in cancer cells, energy production by oxidative phosphorylation in mitochondria is reduced, and anaerobic glycolysis in the cytoplasm increases dramatically (Warburg effect), while the activity of FECH, which converts PpIX to heme, is lower than in normal cells, resulting in a reduction in heme synthesis, an inability to achieve effective heme biosynthesis, and an excessive accumulation of PpIX. PpIX has an optical property of emitting red fluorescence (600 to 740 nm) when excited by blue visible light (375 to 445 nm). Accordingly, when irradiated with blue visible light, cancer cells emit red fluorescence due to the accumulated PpIX, whereas normal cells do not emit red fluorescence because the PpIX has been converted to heme. In this manner, cancer cells and normal cells can be visually distinguished and identified using blue visible light (see Non-Patent Document 1). In clinical practice, photodynamic diagnoses are performed by administering 5-ALA to cancer patients to cause an excessive accumulation of PpIX in the cancer cells, and then irradiating the biological tissue with blue visible light to visualize only the cancerous lesions via the red light emission.

PpIX undergoes a photo-oxidation reaction upon irradiation with excitation light and is converted into photoprotoporphyrin (PPp), resulting in a reduction in fluorescence intensity and bleaching (see Non-Patent Document 2). Because PpIX bleaching can sometimes cause false positives, in conventional photodynamic diagnosis, minimizing observation under blue light sources is recommended to avoid bleaching. Specifically, observation, resection, and hemostasis of cancerous lesions are performed under a white light source, and after promptly confirming lesions emitting red fluorescence derived from PpIX by observation under a blue light source, the resection and hemostasis of the lesions are performed under a white light source. However, since white light also contains wavelengths that excite the red fluorescence, operational speed is required even when working under the white light source. In this manner, in photodynamic diagnosis using PpIX, not only is the allowable observation time in a single area short, but a large dose of 5-ALA is also required. However, high doses can sometimes cause side effects such as photosensitivity, liver dysfunction, hypotension, nausea, and vomiting.

On the other hand, one type of higher-order structure formed by guanine-rich nucleic acids is the guanine quadruplex (G-quadruplex, G4) structure. The G4 structure is a stable higher-order structure formed by stacking, via through π-π stacking, two or more planar structures known as G-quartets, which are formed from four guanine molecules by Hoogsteen hydrogen bonding between the guanine molecules. G4 structures in RNA participate in RNA splicing, RNA transport, and mRNA translation (see Non-Patent Document 3).

Further, compounds having polyfluoro structures are known to be stable and exhibit low toxicity in vivo, and to exhibit excellent take-up by cells and escape from endosomes (see Non-Patent Document 4). Utilizing these properties, investigations are currently being conducted into introducing polyfluoro structures into oligonucleotides and peptide nucleic acids as portions having cell membrane permeability.

### Citation List

### Non-Patent Document

Non-Patent Document 1: Ishizuka et al., International Immunopharmacology, 2011, vol. 11(3), pp. 358 to 365.
Non-Patent Document 2: Juzenas et al., Journal of Photochemistry and Photobiology B: Biology, 2001, vol. 61(1-2), pp. 78 to 86.
Non-Patent Document 3: Rhodes et al., Nucleic Acids Research, 2015, vol. 43(18), pp. 8627 to 8637.
Non-Patent Document 4: Zhang et al., MRS Communications, 2018, vol. 8, pp. 303 to 313.
Non-Patent Document 5: Ferreira et al., ChemistryOpen, 2012, vol. 1, pp. 106 to 114.

### SUMMARY OF INVENTION

### Technical Problem

The present invention aims to provide a fluorescence enhancer for enhancing the fluorescence emitted from protoporphyrin IX in cells, and a kit for visualizing cancer cells that includes the fluorescence enhancer.

### Solution to Problem

The inventors of the present invention discovered that the fluorescence intensity of red fluorescence emitted from PpIX upon irradiation with blue visible light can be dramatically enhanced by making a nucleic acid having a G4 structure that is bound to or complexed with a substance having cell membrane permeability coexist with PpIX, thereby leading to the completion of the present invention.

In other words, the present invention includes the following aspects.
[1] A protoporphyrin IX fluorescence enhancer composed of a nucleic acid having a G4 structure, wherein
   the nucleic acid having a G4 structure is bound to or complexed with a substance having cell membrane permeability.
[2] The fluorescence enhancer according to [1], wherein
   the nucleic acid having a G4 structure that is bound to the substance having cell membrane permeability is composed of a fluorine-containing G4 compound in which a nucleic acid having a guanine quadruplex structure and a fluorine-containing group are linked via a linking group, and
   the fluorine-containing group is a perfluoroalkyl group of 1 to 10 carbon atoms having no etheric oxygen atoms between carbon atoms, or a perfluoroalkyl group of 2 to 10 carbon atoms having 1 to 5 etheric oxygen atoms between carbon atoms.
[3] The fluorescence enhancer according to [2], wherein the fluorine-containing group is a group represented by general formula (F2) or (F3) shown below.
   [Chemical formula 1]

   -RF³-(O-CF₂-)ₙ₁-O-RF⁴ (F2)

   -RF⁵-(O-CF₂-CF₂-)ₙ₂-O-RF⁶ (F3)

   [In the above formulas, R^{F3} represents a perfluoroalkylene group having q3 carbon atoms; R^{F4} represents a perfluoroalkyl group having q4 carbon atoms; n1, q3 and q4 are natural numbers such that n1+q3+q4 is at least 3 but not more than 10; R^{F5} represents a perfluoroalkylene group having q5 carbon atoms; R^{F6} represents a perfluoroalkyl group having q6 carbon atoms; and n2, q5 and q6 are natural numbers such that 2×n2+q5+q6 is at least 4 but not more than 10.]
[4] The fluorescence enhancer according to [2] or [3], wherein
   the linking group is an alkylene group, alkenylene group, -C(=O)-, -NH-, -O-, - S-, -C(=O)-O-, -O-C(=O)-, -C(=O)NH-, -NH-C(=O)-, -NH-C(=O)-O-, -O-C(=O)-NH-, - O-P(=O)(OH)-O-, a polyethylene glycol group, or a group composed of a combination thereof.
[5] The fluorescence enhancer according to any one of [2] to [4], wherein
   the fluorine-containing G4 compound is a compound represented by general formula (1) shown below.
   [Chemical formula 2]

   R^{FE}-Z¹-G⁰ (1)

   [In formula (1), G⁰ represents a nucleic acid having a guanine quadruplex structure, and may be modified with a substance other than a nucleic acid; R^{FE} represents a perfluoroalkyl group of 1 to 10 carbon atoms having no etheric oxygen atoms between carbon atoms, or a perfluoroalkyl group of 2 to 10 carbon atoms having 1 to 5 etheric oxygen atoms between carbon atoms; and Z¹ represents a linking group.]
[6] The fluorescence enhancer according to [2], wherein
   the fluorine-containing G4 compound is a compound represented by general formula (2) shown below.

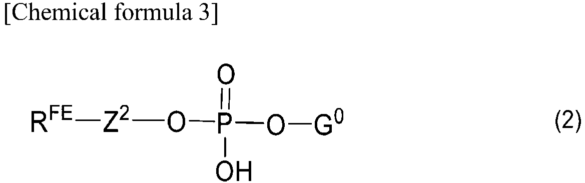

   [In formula (2), G⁰ represents a nucleic acid having a guanine quadruplex structure, and may be modified with a substance other than a nucleic acid; R^{FE} represents a perfluoroalkyl group of 1 to 10 carbon atoms having no etheric oxygen atoms between carbon atoms, or a perfluoroalkyl group of 2 to 10 carbon atoms having 1 to 5 etheric oxygen atoms between carbon atoms; and Z² represents a linking group.]
[7] The fluorescence enhancer according to [1], wherein the nucleic acid having a G4 structure is complexed with a lipid nanoparticle.
[8] The fluorescence enhancer according to any one of [1] to [7], wherein
   the nucleic acid having a G4 structure is a nucleic acid having at least one base sequence represented by general formula (G1) shown below.
   [Chemical formula 4]

   5'-(Nᵣ₁GₛNᵣ₂)-3' (G1)

   [In formula (G1), Gₛ is a base sequence of s consecutive G (guanine) bases; s represents an integer of at least 2 but not more than 5; N represents A (adenine), C (cytosine), G (guanine), or, T (thymine) or U (uracil); Nᵣ₁ is a base sequence of r1 consecutive N bases; Nᵣ₂ is a base sequence of r2 consecutive N bases; r1 and r2 each represent integers of at least 0 but not more than 7 that satisfy 1≤r1+r2≤7; and in those cases where 2≤r1+r2≤7, the plurality of N may be bases of the same type or bases of different types.]
[9] A method for producing a fluorine-containing G4 compound, the method including bonding an amidite derivative compound containing a fluorine-containing group and a nucleic acid having a guanine quadruplex structure using the phosphoramidite method, thereby synthesizing a fluorine-containing G4 compound in which the nucleic acid having a guanine quadruplex structure and the fluorine-containing group are linked via a linking group.
[10] The method for producing a fluorine-containing G4 compound of [9], wherein the fluorine-containing group is a perfluoroalkyl group of 1 to 10 carbon atoms having no etheric oxygen atoms between carbon atoms, or a perfluoroalkyl group of 2 to 10 carbon atoms having 1 to 5 etheric oxygen atoms between carbon atoms.
[11] A pharmaceutical composition containing the fluorescence enhancer of any one of [1] to [8] as an active ingredient.
[12] A cancer cell visualization kit containing the fluorescence enhancer of any one of [1] to [8] and 5-aminolevulinic acid.
[13] A cancer cell visualization method, including introducing the fluorescence enhancer of any one of [1] to [8] and 5-aminolevulinic acid into cancer cells in vitro. Advantageous Effects of Invention

The fluorescence enhancer according to the present invention has a nucleic acid with a G4 structure, and can therefore reduce PpIX bleaching, and moreover, because the fluorescence enhancer is bound to or complexed with a substance having cell membrane permeability, the fluorescence enhancer also exhibits excellent cell membrane permeability. For these reasons, the fluorescence intensity of red fluorescence emitted from PpIX when irradiated with blue visible light can be enhanced by making the fluorescence enhancer coexist with PpIX.

In particular, the cancer cell visualization kit and the cancer cell visualization method according to the present invention enable the visualization of cancer cells that have accumulated PpIX, a metabolite of 5-aminolevulinic acid, with high sensitivity using blue visible light.

### BRIEF DESCRIPTION OF DRAWINGS

[FIG. 1] A ¹H-NMR spectrum of a synthesized phosphoramidite derivative compound (EEA-CH₂-amidite) in Example 1.
[FIG. 2] A ¹⁹F-NMR spectrum of a synthesized phosphoramidite derivative compound (EEA-CH₂-amidite) in Example 1.
[FIG. 3] A ³¹P-NMR spectrum of a synthesized phosphoramidite derivative compound (EEA-CH₂-amidite) in Example 1.
[FIG. 4] A diagram illustrating HR-Mass results of a synthesized phosphoramidite derivative compound (EEA-CH₂-amidite) in Example 1.
[FIG. 5] A diagram illustrating MALDI-TOF MS analysis results of a synthesized fluorine-containing oligomer RNA (EEA-(UAGGGU)₄RNA) in Example 1.
[FIG. 6] A diagram illustrating the results of fluorescence emission spectrum measurements of a sample containing EEA-(UAGGGU)₄RNA added to PpIX and a control sample containing only PpIX in Example 1.
[FIG. 7] A diagram illustrating the results in Example 1 of examining the fluorescence intensity of red fluorescence emitted from PpIX after one hour or two hours incubation of a sample of a test group 1 to which EEA-(UAGGGU)₄RNA, RNase A, and PpIX were added, a sample of a test group 2 to which only PpIX was added, and a sample of a test group 3 to which EEA-(UAGGGU)₄RNA and PpIX were added.
[FIG. 8] ¹H-NMR spectra of samples containing EEA-(UAGGGU)₄RNA and PpIX mixed in ratios (molar ratios) of 1:0, 1:1, 1:2 and 1:5.
[FIG. 9] Bright field images (upper row) and red fluorescence images (lower row) in Example 2 of breast cancer cells to which 5-ALA and EEA-(UAGGGU)₄RNA were added (test group 1), breast cancer cells to which only 5-ALA was added (test group 2), and breast cancer cells to which neither 5-ALA nor EEA-(UAGGGU)₄RNA were added (test group 3).
[FIG. 10] A diagram illustrating red fluorescence images in Example 3 of various tissues after administering 5-ALA and EEA-(UAGGGU)₄RNA (upper row) or administering only 5-ALA (lower row) to mice having formed tumor tissue derived from breast cancer cell line 4T1.
[FIG. 11] A ¹H-NMR spectrum of a synthesized phosphoramidite derivative compound (EEEA-CH₂-amidite) in Example 4.
[FIG. 12] A ¹⁹F-NMR spectrum of a synthesized phosphoramidite derivative compound (EEEA-CH₂-amidite) in Example 4.
[FIG. 13] A ³¹P-NMR spectrum of a synthesized phosphoramidite derivative compound (EEEA-CH₂-amidite) in Example 4.
[FIG. 14] A diagram illustrating HR-Mass results of a synthesized phosphoramidite derivative compound (EEEA-CH₂-amidite) in Example 4.
[FIG. 15] A diagram illustrating MALDI-TOF MS analysis results of a synthesized fluorine-containing oligomer RNA (EEEA-(UAGGGU)₄RNA) in Example 4.
[FIG. 16] A ¹H-NMR spectrum of a synthesized phosphoramidite derivative compound (BEA-CH₂-amidite) in Example 4.
[FIG. 17] A ¹⁹F-NMR spectrum of a synthesized phosphoramidite derivative compound (BEA-CH₂-amidite) in Example 4.
[FIG. 18] A ³¹P-NMR spectrum of a synthesized phosphoramidite derivative compound (BEA-CH₂-amidite) in Example 4.
[FIG. 19] A diagram illustrating HR-Mass results of a synthesized phosphoramidite derivative compound (BEA-CH₂-amidite) in Example 4.
[FIG. 20] A diagram illustrating MALDI-TOF MS analysis results of a synthesized fluorine-containing oligomer RNA (BEA-(UAGGGU)₄RNA) in Example 4.
[FIG. 21] A ¹H-NMR spectrum of a synthesized phosphoramidite derivative compound (C5PE-CH₂-amidite) in Example 4.
[FIG. 22] A ¹⁹F-NMR spectrum of a synthesized phosphoramidite derivative compound (C5PE-CH₂-amidite) in Example 4.
[FIG. 23] A ³¹P-NMR spectrum of a synthesized phosphoramidite derivative compound (C5PE-CH₂-amidite) in Example 4.
[FIG. 24] A diagram illustrating HR-Mass results of a synthesized phosphoramidite derivative compound (C5PE-CH₂-amidite) in Example 4.

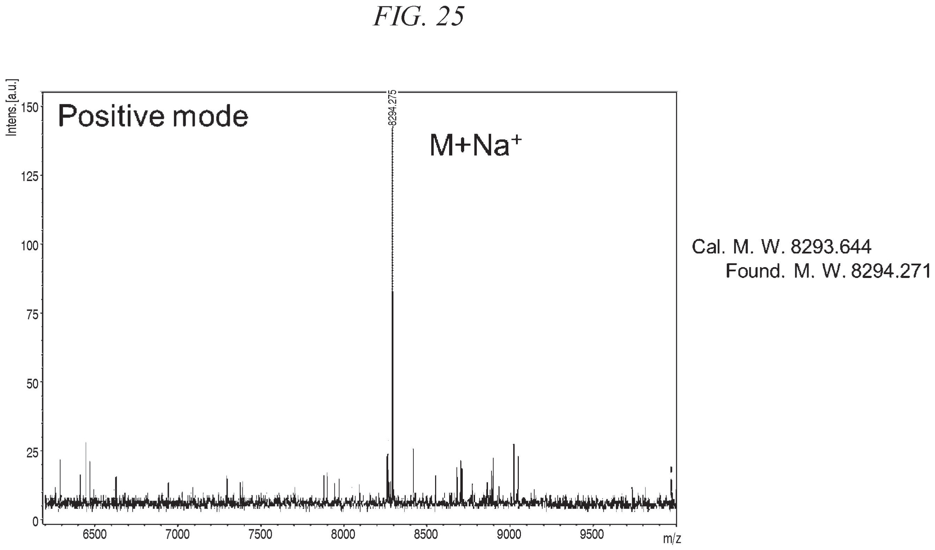

[FIG. 25] A diagram illustrating MALDI-TOF MS analysis results of a synthesized fluorine-containing oligomer RNA (C5PE-(UAGGGU)₄RNA) in Example 4.
[FIG. 26A] A diagram illustrating the results of fluorescence emission spectrum measurements in Example 4 of samples containing EEEA-(UAGGGU)₄RNA, BEA-(UAGGGU)₄RNA or C5PE-(UAGGGU)₄RNA added as an oligomer RNA to PpIX, and a control sample containing only PpIX.
[FIG. 26B] A diagram illustrating the results of fluorescence emission spectrum measurements in Example 4 of samples containing C5PE-(UAGGGU)₄RNA or (UAGGGU)₄RNA added as an oligomer RNA to PpIX, and a control sample containing only PpIX.
[FIG. 27] Bright field images (upper row) and red fluorescence images (lower row) in Example 5 of breast cancer cells to which 5-ALA and C5PE-(UAGGGU)₄RNA were added (test group 1), breast cancer cells to which 5-ALA and (UAGGGU)₄RNA were added (test group 2), and breast cancer cells to which only 5-ALA was added (test group 3).
[FIG. 28] A diagram illustrating MALDI-TOF MS analysis results of a synthesized L-type oligomer RNA (L-(UAGGGU)₄RNA) in Example 6.

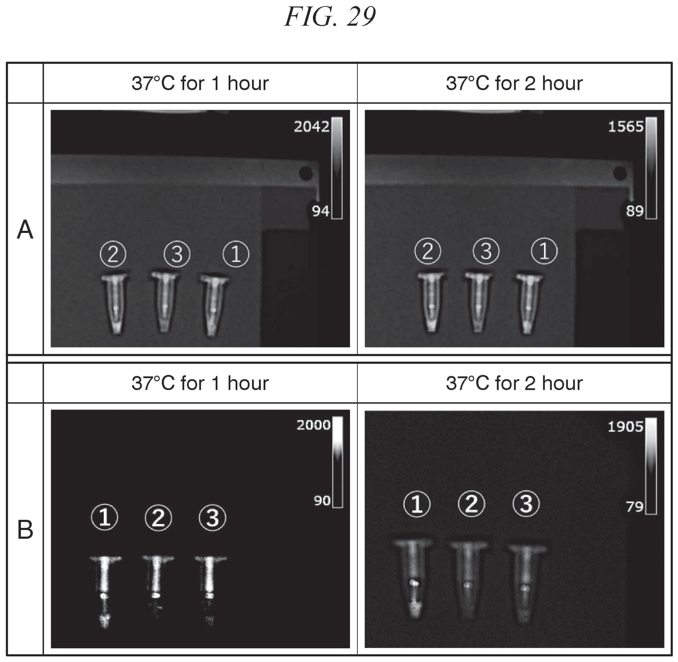

[FIG. 29] Diagrams illustrating the results of investigating the effects of EEEA-L-(UAGGGU)₄RNA and (UAGGGU)₄RNA on PpIX fluorescence in the presence of RNAase in Example 6. FIG. 29A illustrates the results of a sample of a test group 1 to which EEEA-L-(UAGGGU)₄RNA, RNase A, and PpIX were added, a sample of a test group 2 to which EEEA-L-(UAGGGU)₄RNA and PpIX were added, and a sample of a test group 3 to which only PpIX was added. FIG. 29B illustrates the results of a sample of a test group 1 to which EEEA-L-(UAGGGU)₄RNA, RNase A, and PpIX were added, a sample of a test group 2 to which only PpIX was added, and a test group 3 to which (UAGGGU)₄RNA, RNase A, and PpIX were added.
[FIG. 30] Bright field images (upper row) and red fluorescence images (lower row) in Example 7 of breast cancer cells to which 5-ALA and EEEA-L-(UAGGGU)₄RNA were added (test group 1), and breast cancer cells to which only 5-ALA was added (test group 2).
[FIG. 31] A diagram illustrating the results of fluorescence emission spectrum measurements in Example 8 of a sample containing an L-(UAGGGU)₄RNA-containing LNP added to PpIX ("RNA in LNP"), a sample containing L-(UAGGGU)₄RNA added to PpIX ("RNA"), and a control sample containing only PpIX ("control").
[FIG. 32] Bright field images (upper row) and red fluorescence images (lower row) in Example 8 of breast cancer cells to which 5-ALA and L-(UAGGGU)₄RNA-containing LNP were added (test group 1), and breast cancer cells to which only 5-ALA was added (test group 2).
[FIG. 33] A diagram illustrating MALDI-TOF MS analysis results of a synthesized Cy5-modified oligomer RNA in Reference Example 1.
[FIG. 34] A diagram illustrating the results of fluorescence emission spectrum measurements in Reference Example 1 of a sample containing a Cy5-modified oligomer RNA added to PpIX, and a control sample containing only PpIX.
[FIG. 35] A diagram illustrating the results of fluorescence emission spectrum measurements in Reference Example 2 of a sample containing an L-type biotin-modified oligomer RNA added to PpIX, and a control sample containing only PpIX.
[FIG. 36] A diagram illustrating the results of investigating the fluorescence intensity of red fluorescence emitted from PpIX after 1 to 5 hours incubation of a sample of a test group 1 to which an L-type biotin-modified oligomer RNA and PpIX were added, a sample of a test group 2 to which an L-type biotin-modified oligomer RNA, PpIX and RNase A were added, and a sample of a test group 3 to which only PpIX was added.

### DESCRIPTION OF EMBODIMENTS

In the present invention and in the present description, the term "nucleic acid" means a molecule in which nucleotides are linked by phosphodiester bonds. These nucleotides include not only natural nucleotides (naturally occurring nucleotides, D-type nucleotides) such as deoxyribonucleotides and ribonucleotides, but also artificial nucleotides that are formed by modifying natural nucleotides, and which can be linked to natural nucleotides by phosphodiester bonds. Examples of the artificial nucleotides include nucleotides in which the side chain of a natural nucleotide has been modified with a functional group such as an amino group, nucleotides in which the hydroxyl group at the 2' position of the ribose skeleton has been substituted with a methoxy group, fluoro group, methoxyethyl group or the like, phosphorothioate nucleotides (in which the oxygen atom of the phosphate group has been replaced with a sulfur atom), morpholino nucleotides (in which the ribose or deoxyribose has been substituted with a morpholine ring), as well as BNA (Bridged Nucleic Acids), HNA (Hexitol Nucleic Acids), LNA (Locked Nucleic Acids), PNA (Peptide Nucleic Acids), TNA (Threose Nucleic Acids), GNA (Glycerol Nucleic Acids), CeNA (Cyclohexenyl Nucleic Acids), and SNA (Serinol nucleic acids). Additional examples of the artificial nucleotides include L-type nucleotides and nucleotides in which the side chain or the like of an L-type nucleotide has been modified. The term "nucleic acid" encompasses molecules in which only one or more types of natural nucleotides are linked by phosphodiester bonds, such as DNA and RNA, molecules in which one or more types of natural nucleotides and one or more types of artificial nucleotides are linked by phosphodiester bonds, and molecules in which only one or more types of artificial nucleotides are linked by phosphodiester bonds.

In the present invention and in the present description, "Cₚ₁₋ₚ₂" (wherein p1 and p2 are positive integers that satisfy p1<p2) means a group having p1 to p2 carbon atoms.

In the present invention and in the present description, a "C₁₋₁₀ alkyl group" is an alkyl group of 1 to 10 carbon atoms, and may have either a linear chain or a branched chain. A "C₂₋₁₀ alkyl group" is an alkyl group of 2 to 10 carbon atoms, and may have either a linear chain or a branched chain. Examples of the C₁₋₁₀ alkyl group include a methyl group, ethyl group, propyl group, isopropyl group, butyl group, isobutyl group, sec-butyl group, tert-butyl group, pentyl group, isopentyl group, neopentyl group, tert-pentyl group, hexyl group, heptyl group, octyl group, nonyl group, and decyl group.

In the present invention and in the present description, a "C₁₋₆ alkyl group" is an alkyl group of 1 to 6 carbon atoms, and may have either a linear chain or a branched chain. Examples of the C₁₋₆ alkyl group include a methyl group, ethyl group, propyl group, isopropyl group, butyl group, isobutyl group, sec-butyl group, tert-butyl group, pentyl group, isopentyl group, neopentyl group, tert-pentyl group, and hexyl group.

In the present invention and in the present description, an "alkylene group" is a divalent group in which two hydrogen atoms have been removed from a saturated hydrocarbon, and may have either a linear chain or a branched chain. Examples of the alkylene group include a methylene group, ethylene group, trimethylene group, tetramethylene group, pentamethylene group, hexamethylene group, heptamethylene group, octamethylene group, nonamethylene group, methylmethylene group, ethylmethylene group, methylethylene group, methylpropylene group, ethylethylene group, dimethylmethylene group, 1,2-dimethylethylene group, 1,1-dimethylethylene group, 1-ethylpropylene group, 2-ethylpropylene group, 1,2-dimethylpropylene group, 2,2-dimethylpropylene group, 1-propylpropylene group, 2-propylpropylene group, 1-methyl-1-ethylpropylene group, 1-methyl-2-ethylpropylene group, 1-ethyl-2-methylpropylene group, 2-methyl-2-ethylpropylene group, 1-methylbutylene group, 2-methylbutylene group, 3-methylbutylene group, 2-ethylbutylene group, 1-methylpentylene group, 2-ethylpentylene group, and 1-methylhexylene group.

In the present invention and in the present description, an "alkenylene group" is a divalent group in which two hydrogen atoms have been removed from a hydrocarbon having at least one double bond, and may have either a linear chain or a branched chain. Examples of the alkenylene group include an ethenyl group, propenyl group, butenyl group, butadienyl group, pentenyl group, pentadienyl group, hexenyl group, hexadienyl group, hexatrienyl group, heptenyl group, heptadienyl group, heptatrienyl group, octenyl group, octadienyl group, and octatrienyl group.

In the present invention and in the present description, a "C₁₋₁₀ perfluoroalkyl group" is a group in which all of the hydrogen atoms of an alkyl group having 1 to 10 carbon atoms have each been substituted with a fluorine atom, and is also referred to as a "fully halogenated C₁₋₁₀ alkyl group." Examples of the C₁₋₁₀ perfluoroalkyl group include a perfluoromethyl group, perfluoroethyl group, perfluoropropyl group, perfluoroisopropyl group, perfluorobutyl group, perfluoroisobutyl group, perfluoro-sec-butyl group, perfluoro-tert-butyl group, perfluoropentyl group, perfluoroisopentyl group, perfluoroneopentyl group, perfluoro-tert-pentyl group, perfluorohexyl group, perfluoroheptyl group, perfluorooctyl group, perfluorononyl group, and perfluorodecyl group.

In the present invention and in the present description, the term "etheric oxygen atom" refers to an oxygen atom linking two carbon atoms, and does not encompass oxygen atoms that are linked in series to another oxygen atom. The number of etheric oxygen atoms that an alkyl group of Nc carbon atoms (wherein Nc is an integer of 2 or greater) may have is at most Nc-1. Further, a "C₂₋₁₀ alkyl group having an etheric oxygen atom between carbon atoms" is a group having at least one etheric oxygen atom between carbon atoms of a C₂₋₁₀ alkyl group. In the following description, an "alkyl group having an etheric oxygen atom between carbon atoms" may be referred to as an "ether bond-containing alkyl group".

In the present invention and in the present description, a "C₂₋₁₀ perfluoroalkyl group having an etheric oxygen atom between carbon atoms" is a group in which all of the hydrogen atoms of an ether bond-containing C₂₋₁₀ alkyl group having at least one etheric oxygen atom between carbon atoms of a C₂₋₁₀ alkyl group have each been substituted with a fluorine atom. In the following description, the "perfluoroalkyl group having an etheric oxygen atom between carbon atoms" may be referred to as an "ether bond-containing perfluoroalkyl group."

The fluorescence enhancer according to the present invention enhances the fluorescence intensity of the red fluorescence emitted from PpIX upon irradiation with blue visible light, and is composed of a nucleic acid having a G4 structure. The nucleic acid with a G4 structure stabilizes the structure of PpIX by interacting with PpIX via the G4 structure. As a result of this PpIX structural stabilization effect, the nucleic acid having a G4 structure can enhance the fluorescence intensity of the red fluorescence emitted from PpIX.

In one embodiment, the fluorescence enhancer according to the present invention preferably consists of a nucleic acid having a G4 structure with improved cell membrane permeability. Improving the cell membrane permeability enables the fluorescence enhancer to further enhance the detection sensitivity of PpIX in cells. In the present invention and in the present description, the term "cell membrane permeability" encompasses both the property wherein a substance can pass directly through the cell membrane as is, and the property wherein a substance is taken up into the cell membrane via membrane transport such as endocytosis.

Examples of nucleic acids having a G4 structure with improved cell membrane permeability include nucleic acids in which a nucleic acid having a G4 structure is bound to a substance having cell membrane permeability. Examples of cell membrane permeable groups include hydrophobic groups such as fluorine-containing groups. Examples of the substance having cell membrane permeability include fluorine group-containing compounds and cell-penetrating peptides (CPPs). Examples of CPPs include peptides derived from the TAT protein of the HIV virus, peptides derived from Antennapedia, and polyarginine peptides (see International Patent Publication No. WO2008/089491).

Additional examples of nucleic acids having a G4 structure with improved cell membrane permeability include nucleic acids in which a nucleic acid having a G4 structure is complexed with a substance having cell membrane permeability. For example, the cell membrane permeability of a nucleic acid having a G4 structure can be improved by complexing the nucleic acid having a G4 structure with a drug delivery system (DDS) carrier that has cell membrane permeability. The DDS carrier may be formed from nanoparticles or microparticles. Furthermore, the cell membrane permeability of a nucleic acid having a G4 structure can also be improved by complexing the nucleic acid having a G4 structure with a CPP. Examples of the above nanoparticles include liposomes, polymer micelles, dendrimers, lipid nanoparticles (LNP), and exosomes, and among these, LNP are preferred.

### <Fluorine-Containing G4 Compound>

Examples of the substance having cell membrane permeability include fluorine group-containing compounds. A nucleic acid in which a nucleic acid having a G4 structure is bound to a fluorine group-containing compound can be used as the fluorescence enhancer according to the present invention. It is particularly preferable that the fluorescence enhancer according to the present invention be composed of a fluorine-containing G4 compound in which a nucleic acid having a G4 structure and a fluorine-containing group are linked via a linking group. The fluorine-containing G4 compound interacts with PpIX via the G4 structure, thereby stabilizing the structure of PpIX. Since the fluorine-containing G4 compound has a fluorine-containing group, the fluorine-containing G4 compound exhibits excellent cell membrane permeability. The fluorine-containing G4 compound can particularly enhance the fluorescence intensity of red fluorescence emitted from PpIX in cells, due to the structural stabilizing effect on PpIX and cell membrane permeability. In the following description, a fluorine-containing G4 compound used as the fluorescence enhancer according to the present invention may also be referred to as "the fluorine-containing G4 compound according to the present invention".

The nucleic acid having a G4 structure in the fluorine-containing G4 compound according to the present invention has one or more, preferably two to five, more preferably three to five, even more preferably three or four, and particularly preferably four base sequences (G4 consensus sequences) represented by the formula 5'-(Nᵣ₁GₛNᵣ₂)-3' (general formula (G1)). In the G4 consensus sequence, s represents an integer of at least 2 but not more than 5, and "Gₛ" represents a "base sequence with s consecutive G (guanine) bases". Further, in the G4 consensus sequence, N represents "A (adenine) or C (cytosine) or G (guanine) or T (thymine) or U (uracil)," and r1 and r2 each represent integers of at least 0 but not more than 7 that satisfy 1≤r1+r2≤7. Moreover, "Nᵣ₁" means "a base sequence with r1 consecutive N bases," and "Nr₂" means "a base sequence with r2 consecutive N bases." When 2≤r1+r2≤7, the plurality of N may be bases of the same type or bases of different types. In the G4 consensus sequence of the fluorine-containing G4 compound according to the present invention, it is preferable that each of the plurality of N bases independently represents A, T, or U. Examples of the G4 consensus sequence include 5'-(UAGGGU)-3' (formula (G1-1)), 5'-(GGGUA)-3' (formula (G1-2)), 5'-(GGGTT)-3' (formula (G1-3)), 5'-(UUAGGG)-3' (formula (G1-4)), 5'-(UAGGGGU)-3' (formula (G1-5)), and 5'-(UAGGU)-3' (formula (G1-6)). The G4 structure of the fluorine-containing G4 compound according to the present invention may be parallel, antiparallel, or hybrid. In those cases where the nucleic acid having a G4 structure in the fluorine-containing G4 compound according to the present invention has two or more G4 consensus sequences, it is preferable that these G4 consensus sequences be all the same G4 consensus sequence, but provided a G4 structure can be formed, the nucleic acid may also be composed of two or more types of G4 consensus sequences. For example, the two or more G4 consensus sequences of the nucleic acid having a G4 structure in the fluorine-containing G4 compound according to the present invention may have different Nᵣ₁ and Nᵣ₂ sequences, or different s values.

The nucleic acid having a G4 structure in the fluorine-containing G4 compound according to the present invention may be any nucleic acid having one or more G4 consensus sequences capable of adopting a G4 structure. For example, the nucleic acid may be a single-stranded nucleic acid in which two to five, and preferably four G4 consensus sequences exist in series, either directly or via a linker sequence, or the nucleic acid may be a branched nucleic acid. For example, nucleic acids in which a single-stranded nucleic acid containing one G4 consensus sequence is bound to the tip of each arm of a molecule having four arms, nucleic acids in which a single-stranded nucleic acid containing two G4 consensus sequences is bound to the tip of each arm of a molecule having two arms, and nucleic acids in which a single-stranded nucleic acid containing one G4 consensus sequence is bound to the tip of one arm of a molecule having two arms, while a single-stranded nucleic acid containing three G4 consensus sequences is bound to the tip of the other arm can also be used as the nucleic acid having a G4 structure in the fluorine-containing G4 compound according to the present invention. Examples of the nucleic acid in which a single-stranded nucleic acid containing one G4 consensus sequence is bound to each arm of a molecule having four arms include the nucleic acid described in Non-Patent Document 5, in which a single-stranded nucleic acid containing one G4 consensus sequence is attached to each of four arms of Trebler phosphoramidite.

The nucleic acid having a G4 structure in the fluorine-containing G4 compound according to the present invention may be composed of two or more nucleic acid molecules. Examples thereof include nucleic acids having a G4 structure formed by polymerizing two single-stranded nucleic acids in which two consensus sequences exist in series, either directly or via a linker sequence. Additional examples thereof include nucleic acids that adopt a G4 structure by combining four single-stranded nucleic acids that each contain one G4 consensus sequence.

The nucleic acid having a G4 structure in the fluorine-containing G4 compound according to the present invention may be DNA or RNA, or may be a nucleic acid containing both deoxyribonucleotides and ribonucleotides. Further, the nucleic acid having a G4 structure may consist of natural nucleotides, may contain natural nucleotides and one or more types of artificial nucleotides, or may consist of one or more types of artificial nucleotides. In order to prevent decomposition within cells, the nucleic acid having a G4 structure used in the present invention is preferably a nucleic acid having enzyme resistance, and is more preferably an L-type nucleic acid.

The nucleic acid having a G4 structure in the fluorine-containing G4 compound according to the present invention may be a nucleic acid composed solely of the G4 structure, or may be a nucleic acid having a region composed of other base sequences in addition to the G4 structure. There are no particular limitations on these other base sequences, provided they do not inhibit the interaction between the fluorine-containing G4 compound according to the present invention and PpIX. Examples of these other base sequences include functional nucleic acids such as nucleic acid aptamers and nucleic acid probes, as well as nucleic acid chains that serve as linkers.

The nucleic acid having a G4 structure in the fluorine-containing G4 compound according to the present invention may be modified with a substance that does not contribute to the formation of the G4 structure, provided the G4 structure is not impaired. The substance that modifies the nucleic acid having a G4 structure may be a nucleic acid or a substance other than a nucleic acid. Among these modifying substances, there are no particular limitations on the substances other than nucleic acids, and examples thereof include amino acids, peptides, proteins, monosaccharides, oligosaccharides, glycans, lipids, and low molecular weight compounds. Chimeric molecules composed of a combination of two or more types of these substances, or chimeric molecules of these substances and a nucleic acid may also be used. Examples of such chimeric molecules include glycoproteins and lipoproteins.

The modifying substance used to modify the nucleic acid having a G4 structure may have a specific function or may be a substance with no particular function. Examples of substances with a specific function include molecules that specifically or selectively bind to specific substances, such as antibodies, sugar-binding molecules, hormone-binding molecules, transporter molecules, ligands (agonists, antagonists), and cell surface antigen-binding molecules. Further, substances that have a specific function but do not bind specifically to specific molecules, such as cell membrane-permeable peptides and liposomes, and labeling substances such as fluorescent substances can also be used as the modifying substance to modify the nucleic acid having a G4 structure. In order to facilitate purification and detection of the fluorine-containing G4 compound according to the present invention, it is also preferable that the nucleic acid having a G4 structure be modified with biotin, a tag peptide (His tag, Myc tag, or Flag tag or the like), a fluorescent substance or the like.

The nucleic acid having a G4 structure and the substance that modifies the nucleic acid may be directly bound together or bound via a linker. The linker may be a single-stranded nucleic acid chain, a double-stranded nucleic acid chain, a peptide linker, or an alkylene glycol chain such as a polyethylene glycol chain.

The fluorine-containing group of the fluorine-containing G4 compound according to the present invention is a C₁₋₁₀ perfluoroalkyl group having no etheric oxygen atoms between carbon atoms, or a C₂₋₁₀ perfluoroalkyl group having 1 to 5 etheric oxygen atoms between carbon atoms. In the following description, "a C₁₋₁₀ perfluoroalkyl group having no etheric oxygen atoms between carbon atoms, or a C₂₋₁₀ perfluoroalkyl group having 1 to 5 etheric oxygen atoms between carbon atoms" is referred to as R^{FE}.

In those cases where R^{FE} represents a C₁₋₁₀ perfluoroalkyl group having no etheric oxygen atoms between carbon atoms, the group may be either linear or branched. C₁₋₁₀ perfluoroalkyl groups exhibit adequate cell membrane permeability while suppressing toxicity to cells. The fluorine-containing group of the fluorine-containing G4 compound according to the present invention is preferably a linear C₂₋₁₀ perfluoroalkyl group, more preferably a linear C₃₋₁₀ perfluoroalkyl group, and even more preferably a linear C₄₋₁₀ perfluoroalkyl group.

In those cases where R^{FE} represents an etheric oxygen-containing C₂₋₁₀ perfluoroalkyl group, the group is, for example, preferably a group represented by one of general formulas (F1) to (F4) shown below.
[Chemical formula 5]

-RF¹-O-RF² (F1)

-RF³-(O-CF₂-)ₙ₁-O-RF⁴ (F2)

-RF⁵-(O-CF₂-CF₂-)ₙ₂-O-RF⁶ (F3)

-RF⁷-(O-CF₂-CF₂-CF₂-)ₙ₃-O-RF⁸ (F4)

In general formula (F1), R^{F1} represents a perfluoroalkylene group of q1 carbon atoms, and R^{F2} represents a perfluoroalkyl group of q2 carbon atoms. Moreover, q1 and q2 are natural numbers, the sum of which is at least 2 but not more than 10.

In general formula (F2), R^{F3} represents a perfluoroalkylene group of q3 carbon atoms, and R^{F4} represents a perfluoroalkyl group of q4 carbon atoms. Moreover, n1, q3 and q4 are natural numbers such that the value of n1+q3+q4 is at least 3 but not more than 10.

In general formula (F3), R^{F5} represents a perfluoroalkylene group of q5 carbon atoms, and R^{F6} represents a perfluoroalkyl group of q6 carbon atoms. Moreover, n2, q5 and q6 are natural numbers such that the value of 2×n2+q5+q6 is at least 4 but not more than 10.

In general formula (F4), R^{F7} represents a perfluoroalkylene group of q7 carbon atoms, and R^{F8} represents a perfluoroalkyl group of q8 carbon atoms. Moreover, n3, q7 and q8 are natural numbers such that the value of 3×n3+q7+q8 is at least 5 but not more than 10.

R^{F1} in general formula (F1), R^{F3} in general formula (F2), R^{F5} in general formula (F3), and R^{F7} in general formula (F4) may each be a linear perfluoroalkylene group or a branched perfluoroalkylene group. Each of R^{F1}, R^{F3}, R^{F5} and R^{F7} is preferably a C₁₋₃ perfluoroalkylene group, more preferably a group in which all of the hydrogen atoms of a methylene group, ethylene group, methylmethylene group, ethylmethylene group, dimethylmethylene group, or methylethylene group have been substituted with fluorine atoms, even more preferably a group in which all of the hydrogen atoms of a methylene group, methylmethylene group, ethylmethylene group, or dimethylmethylene group have been substituted with fluorine atoms, and still more preferably a group in which all of the hydrogen atoms of a methylene group or methylmethylene group have been substituted with fluorine atoms.

R^{F2} in general formula (F1), R^{F4} in general formula (F2), R^{F6} in general formula (F3), and R^{F8} in general formula (F4) may each be a linear perfluoroalkyl group or a branched perfluoroalkyl group. Each of R^{F2}, R^{F4}, R^{F6} and R^{F8} is preferably a linear or branched C₁₋₅ perfluoroalkyl group, more preferably a linear C₁₋₅ perfluoroalkyl group, and even more preferably a linear C₂₋₄ perfluoroalkyl group.

For example, the ether bond-containing perfluoroalkyl groups of the fluorine compounds disclosed in Japanese Unexamined Patent Application, First Publication No. 2006-321797 and Japanese Unexamined Patent Application, First Publication No. 2011-1377, together with synthesis methods for those compounds, can be used as the fluorine-containing group in the fluorine-containing G4 compound according to the present invention.

In the fluorine-containing G4 compound according to the present invention, there are no particular limitations on the linking group that links the nucleic acid having a G4 structure and the fluorine-containing group, provided the linking group is capable of linking the nucleic acid having a G4 structure and the fluorine-containing group, and any divalent or higher organic group may be used. Examples of this divalent or higher organic group include alkylene groups, alkenylene groups, -C(=O)-, -NH-, -O-, -S-, - C(=O)-O-, -O-C(=O)-, -C(=O)NH-, -NH-C(=O)-, -NH-C(=O)-O-, -O-C(=O)-NH-, -OP(=O)(OH)-O-, and polyethylene glycol (PEG) groups (-(C₂H₄O)ₙ-, wherein n is a natural number). Further, groups in which two or more hydrogen atoms have been removed from a ring such as a pyrrole ring, pyrazole ring, imidazole ring, triazole ring, pyridine ring, pyrimidine ring, pyrazine ring, oxazole ring, thiazole ring, furan ring, thiophene ring, or benzene ring can also be used as the divalent or higher linking group.

In those cases where the linking group is an alkylene group, the alkylene group is preferably a C₁₋₁₀ alkylene group (an alkylene group of 1 to 10 carbon atoms), and may be either linear or branched. In those cases where the linking group is an alkenylene group, the alkenylene group is preferably a C₂₋₁₀ alkylene group (an alkenylene group of 2 to 10 carbon atoms), and may be either linear or branched. Trivalent or higher linking groups can be formed by removing one or more additional hydrogen atoms from the above alkylene groups or alkenylene groups.

In the fluorine-containing G4 compound according to the present invention, the linking group that links the nucleic acid having a G4 structure and the fluorine-containing group may also be a divalent or higher organic group composed of an appropriate combination of the divalent or higher organic groups described above. Moreover, appropriate combinations of two or more of these linking groups that form an overall linking group that is trivalent or higher may also be used as the linking group between the nucleic acid having a G4 structure and the fluorine-containing group. In those cases where the linking group is a trivalent or higher organic group, the linking group can link another substance in addition to the nucleic acid having a G4 structure and the fluorine-containing group. Examples of this other substance include modifying substances that modify the nucleic acid having a G4 structure.

In the fluorine-containing G4 compound according to the present invention, the linking group that links the nucleic acid having a G4 structure and the fluorine-containing group is preferably an alkylene group, alkenylene group, -C(=O)-, -NH-, -O-, -S-, -C(=O)-O-, -O-C(=O)-, -C(=O)NH-, -NH-C(=O)-, -NH-C(=O)-O-, -O-C(=O)-NH-, - O-P(=O)(OH)-O-, PEG group, or a group composed of a combination of these groups. Among these possibilities, a -C₁₋₁₀ alkylene group-O-P(=O)(OH)-O-, -C₂₋₁₀ alkenylene group-O-P(=O)(OH)-O-, -C₁₋₁₀ alkylene group-CO-, -C₁₋₁₀ alkylene group-CO-O-, -C₂₋₁₀ alkenylene group-CO-, -C₂₋₁₀ alkenylene group-CO-O-, -C₁₋₁₀ alkylene group-NH-, or - C₂₋₁₀ alkenylene group-NH- is more preferred, and a -C₁₋₁₀ alkylene group-OP(=O)(OH)-O- or -C₂₋₁₀ alkenylene group-O-P(=O)(OH)-O- is even more preferred.

The fluorine-containing G4 compound according to the present invention may be a compound in which a fluorine-containing group is linked to the 5'-end of the nucleic acid having a G4 structure via a linking group, or may be a compound in which a fluorine-containing group is linked to the 3'-end of the nucleic acid having a G4 structure via a linking group.

In those cases where the nucleic acid having a G4 structure in the fluorine-containing G4 compound according to the present invention is a single-stranded nucleic acid, a compound obtained by linking a fluorine-containing group to the 5'-end or the 3'-end of the single-stranded nucleic acid via a divalent linking group, and linking any of various modifying substances to the remaining end via a divalent linking group can be used as the fluorine-containing G4 compound according to the present invention. Further, in those cases where the nucleic acid having the G4 structure in the fluorine-containing G4 compound according to the present invention has a branched structure containing two or more single-stranded nucleic acids, a compound obtained by linking a fluorine-containing group to one of the 5'-end and 3'-end of the nucleic acid via a divalent linking group, and linking, via a divalent linking group, any of various modifying substances to the other of the 5'-end and 3'-end of the nucleic acid not have the linked fluorine-containing group can be used as the fluorine-containing G4 compound according to the present invention. Furthermore, the fluorine-containing G4 compound according to the present invention may also be a compound in which any of various modifying substances are linked to either the 5'-end or the 3'-end of the nucleic acid having a G4 structure via a divalent linking group, and a fluorine-containing group is further linked to the modifying substance via a divalent linking group.

Examples of the fluorine-containing G4 compound according to the present invention include compounds represented by general formula (1) shown below. In formula (1), G⁰ represents a nucleic acid having a G4 structure, and may be modified with a substance other than a nucleic acid. Z1 represents a linking group. RF^{E} represents a C₁₋₁₀ perfluoroalkyl group having no etheric oxygen atoms between carbon atoms, or a C₂₋₁₀ perfluoroalkyl group having 1 to 5 etheric oxygen atoms between carbon atoms. Examples of the nucleic acid having a G4 structure (which may be modified with a substance other than a nucleic acid), the linking group, and R^{FE} are as described above.
[Chemical formula 6]

R^{FE}-Z¹-G⁰ (1)

Compounds represented by any of general formulas (1-1) to (1-5) shown below are also preferred as the compound represented by general formula (1). In the formulas below, G⁰ and G'⁰ each represent a nucleic acid having a G4 structure, and may be modified with a substance other than a nucleic acid. In the formulas below, Z¹¹, Z¹¹, Z¹³ and Z¹⁴ each independently represent a divalent linking group, and Z¹⁵ represents a trivalent linking group. The divalent linking groups and trivalent linking groups may employ the organic groups mentioned above as linking groups. In the formulas below, L¹¹, L¹² and L¹³ each independently represent a modifying substance. Examples of these modifying substances include the substances mentioned above as examples of the modifying substance for the nucleic acid having a G4 structure.

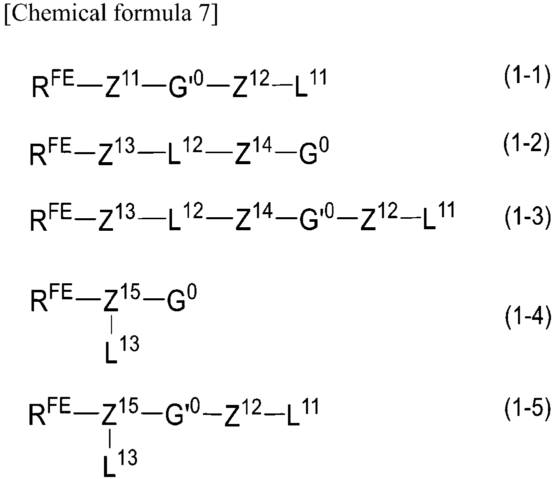

In terms of enabling a simple synthesis using the phosphoramidite method (a solid phase synthesis method), which is widely used for nucleic acid synthesis, a compound represented by general formula (2) shown below is preferred as the fluorine-containing G4 compound according to the present invention. In general formula (2), G⁰ and R^{FE} are the same as described above in relation to general formula (1). Z² represents a linking group, and specific examples thereof include the same groups as those described above for Z¹.

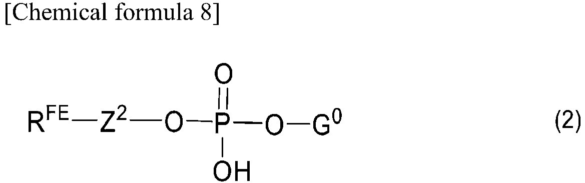

The compound represented by general formula (2) can be synthesized, for example, by binding an amidite derivative compound containing the fluorine-containing group (R^{FE}) and a nucleic acid having a G4 structure using the phosphoramidite method. Specifically, by binding (coupling) the amidite group in an amidite derivative compound containing R^{FE} with the hydroxyl group at the 5' position of a nucleic acid having a G4 structure, a fluorine-containing G4 compound according to the present invention can be synthesized. This coupling reaction can be conducted in the same manner as typical nucleic acid synthesis reactions by the phosphoramidite method, and moreover, the synthesis may also be conducted using widely used automated nucleic acid synthesizers.

The amidite derivative compound containing R^{FE} can be synthesized by introducing a phosphorylated amidite group at the hydroxyl group of a compound having R^{FE} and a hydroxyl group. Examples of the compounds having R^{FE} and a hydroxyl group include compounds represented by general formula (3) shown below. In general formula (3), R^{FE} and Z² are the same as described above in relation to general formula (2). Z² is preferably a C₁₋₆ alkylene group, and more preferably a methylene group, ethylene group, or propylene group. Further, the hydroxyl group in general formula (3) may be protected with a 4,4'-dimethoxytriphenylmethyl group (DMTr) or the like.
[Chemical formula 9]

R^{FE}-Z²-OH (3)

There are no particular limitations on the method used for introducing a phosphorylated amidite group into the compound represented by general formula (3), provided a phosphorylated amidite group can be introduced, and various synthesis methods can be employed. Commercially available phosphoramidizing reagents such as 2-cyanoethyldiisopropylchlorophosphoramidite (CAS RN 89992-70-1) and 2-cyanoethyltetraisopropylphosphoramidite (CAS RN 102691-36-1) may also be used. For example, the hydroxyl group of the compound represented by general formula (3) can be phosphoramidized with 2-cyanoethyldiisopropylchlorophosphoramidite in the presence of N,N-diisopropylethylamine, using acetonitrile as a solvent.

The fluorine-containing G4 compound, such as the synthesized compound represented by general formula (2), can be isolated and purified using various methods such as ion chromatography, gel filtration chromatography, reverse-phase chromatography, or normal-phase chromatography.

### <G4 Nucleic Acid-Containing LNP>

In one embodiment, the fluorescence enhancer according to the present invention is preferably composed of a nucleic acid in which a nucleic acid having a G4 structure is complexed with an LNP. This nucleic acid having a G4 structure complexed with an LNP is taken up into the cell membrane via membrane transport by the LNP, and is then released from the LNP, thereby enhancing the fluorescence intensity of red fluorescence emitted from PpIX inside the cell. In the following description, this type of complex of a nucleic acid having a G4 structure and an LNP that can be used as the fluorescence enhancer according to the present invention may be referred to as a "G4 nucleic acid-containing LNP according to the present invention".

There are no particular limitations on the LNP used in the G4 nucleic acid-containing LNP according to the present invention. LNPs are basically composed of four types of lipid components: cationic lipids, phospholipids, cholesterol, and PEG lipids (polyethylene glycol-modified lipids). These lipids may employ any known lipids or modified products thereof typically used as LNP constituent lipids in gene therapy or gene modification techniques or the like. For example, the LNPs disclosed in U.S. Patent No. 11,191,849 and U.S. Patent No. 11,684,577 may be used, or LNPs obtained by appropriately modifying these LNPs may be used.

The same nucleic acids as the nucleic acid having a G4 structure used in the fluorine-containing G4 compound according to the present invention can be used as the nucleic acid having a G4 structure used in the G4 nucleic acid-containing LNP according to the present invention. The complex of the nucleic acid having a G4 structure and the LNP can be produced by encapsulating the nucleic acid having a G4 structure within the LNP. For example, by subjecting the LNP constituent lipids to micellization in a solution containing the nucleic acid having a G4 structure, an LNP encapsulating the nucleic acid having a G4 structure, namely a G4 nucleic acid-containing LNP, can be obtained.

The fluorine-containing G4 compound according to the present invention and the G4 nucleic acid-containing LNP according to the present invention may be used as is, or may be mixed with a pharmacologically acceptable carrier or the like to form a pharmaceutical composition. In other words, the fluorescence enhancer according to the present invention containing the fluorine-containing G4 compound according to the present invention or the G4 nucleic acid-containing LNP according to the present invention can be used as an active ingredient in a pharmaceutical composition. Examples of the pharmacologically acceptable carrier include various organic or inorganic carrier substances commonly used as formulation materials, and these substances are incorporated as excipients, lubricants, binders and/or disintegrants in solid formulations; or as solvents, solubilizers, suspension agents, isotonic agents, buffers, and/or analgesics in liquid formulations. Furthermore, if necessary, other formulation additives such as preservatives, antioxidants, colorants and sweeteners may also be used. These carriers and formulation additives can be selected appropriately from those commonly used in pharmaceutical formulations.

A pharmaceutical composition containing the fluorine-containing G4 compound according to the present invention or the G4 nucleic acid-containing LNP according to the present invention can be produced using conventional methods in the formulation technology field, such as those described in the Japanese Pharmacopoeia. The amount of the fluorine-containing G4 compound according to the present invention in the pharmaceutical composition varies depending on the route of administration, the dosage form, and the target dose, but may be within a range, for example, from about 0.1 to 100% by mass.

The dosage of the fluorine-containing G4 compound according to the present invention or the G4 nucleic acid-containing LNP according to the present invention varies depending on the target of administration, the route of administration, the target tissue and the like, but for example, when administered orally or parenterally to an adult patient, the typical single dose of the fluorine-containing G4 compound according to the present invention is within a range from about 0.01 to 250 mg/kg of body weight, preferably from 0.01 to 200 mg/kg of body weight, more preferably from 0.01 to 100 mg/kg of body weight, even more preferably from 0.1 to 50 mg/kg of body weight, and still more preferably from 1.0 to 40 mg/kg of body weight.

The fluorine-containing G4 compound according to the present invention and the G4 nucleic acid-containing LNP according to the present invention act as fluorescence enhancers that increase the fluorescence intensity of the red fluorescence emitted from PpIX upon irradiation with blue visible light, and therefore they are particularly suitable as pharmaceutical compositions for use in combination with 5-ALA in photodynamic diagnostics for visualizing cancer cells using 5-ALA. By using the fluorine-containing G4 compound according to the present invention or the G4 nucleic acid-containing LNP according to the present invention in combination with 5-ALA, the red fluorescence intensity derived from PpIX can be improved, thereby making it possible to reduce the amount of 5-ALA required for the visualization of cancer cells and suppress side effects caused by excessive administration of 5-ALA. Furthermore, because the fluorine-containing G4 compound according to the present invention and the G4 nucleic acid-containing LNP according to the present invention can also suppress bleaching of PpIX, observation of cancerous lesions under a blue light source can be performed for a more adequate amount of time than when only 5-ALA is administered, thereby enabling an improvement in the accuracy of cancerous lesion identification.

For example, when 5-ALA is used to visualize cancer cells during surgical procedures, 5-ALA is generally administered orally 2 to 4 hours before the induction of anesthesia at the time of surgery. The fluorine-containing G4 compound according to the present invention or the G4 nucleic acid-containing LNP according to the present invention may also be administered orally at the same time as the 5-ALA, or may be administered orally independently of the 5-ALA at any point after administration of the 5-ALA until the induction of anesthesia. Alternatively, the fluorine-containing G4 compound or G4 nucleic acid-containing LNP may be applied or sprayed onto the tumor tissue 10 to 30 minutes prior to irradiation with blue visible light during surgery.

By combining the fluorine-containing G4 compound according to the present invention or the G4 nucleic acid-containing LNP according to the present invention with 5-ALA in the form of a kit, the visualization of cancer cells using 5-ALA can be facilitated. In a cancer cell visualization kit containing a fluorescence enhancer composed of the fluorine-containing G4 compound according to the present invention, the 5-ALA included in the kit may be a pharmacologically acceptable salt. Examples of this salt include inorganic acid salts such as the hydrochloride salt, hydrobromide salt, hydroiodide salt, phosphate salt, nitrate salt, and sulfate salt; organic acid salts such as the formate salt, acetate salt, propionate salt, toluenesulfonate salt, succinate salt, oxalate salt, lactate salt, tartrate salt, glycolate salt, methanesulfonate salt, butyrate salt, valerate salt, citrate salt, fumarate salt, maleate salt, and malate salt; alkali metal salts such as the lithium salt, sodium salt, and potassium salt; alkaline earth metal salts such as the magnesium salt and calcium salt; other metal salts such as the aluminum salt and zinc salt; ammonium salts including alkylammonium salts such as the ammonium salt and tetramethylammonium salt; and organic amine salts such as the triethylamine salt, piperidine salt, morpholine salt, and toluidine salt.

The 5-ALA contained in the cancer cell visualization kit together with the fluorine-containing G4 compound according to the present invention may be an ALA derivative. There are no particular limitations on this ALA derivative provided it is a compound that can be metabolized in the body and cause accumulation of PpIX in cancer cells. Examples of such ALA derivatives include alkyl esters of 5-ALA such as the methyl ester, ethyl ester, propyl ester, butyl ester, and pentyl ester.

The fluorine-containing G4 compound according to the present invention and the G4 nucleic acid-containing LNP according to the present invention are useful not only for visualizing cancer cells in the bodies of animals, but also for visualizing cancer cells in vitro. Because the fluorine-containing G4 compound according to the present invention has excellent cell membrane permeability, the fluorine-containing G4 compound can be introduced into the cancer cells simply by direct addition to the culture medium of cancer cells together with 5-aminolevulinic acid.

There are no particular limitations on the types of cancer cells that can be visualized using 5-ALA and the fluorine-containing G4 compound according to the present invention or the G4 nucleic acid-containing LNP according to the present invention, provided the cancer cells accumulate PpIX upon introduction of 5-ALA. The fluorine-containing G4 compound according to the present invention and the G4 nucleic acid-containing LNP according to the present invention can improve the visualization of a variety of cancer cells. Examples of these cancer cells include brain tumors (malignant gliomas), head and neck cancers, adrenocortical carcinoma, anal cancer, bile duct cancer, bladder cancer, breast cancer, cervical cancer, chronic lymphocytic leukemia, chronic myeloid leukemia, colorectal cancer, endometrial cancer, esophageal cancer, Ewing sarcoma, gallbladder cancer, Hodgkin disease, hypopharyngeal cancer, laryngeal cancer, oral and lip cancers, liver cancer, non-small cell lung cancer, non-Hodgkin lymphoma, melanoma, mesothelioma, multiple myeloma, ovarian cancer, pancreatic cancer, prostate cancer, stomach cancer, testicular cancer, and thyroid cancer.

### Examples

The present invention is further described below using a series of examples, but the present invention is not limited to these examples.

### [Example 1]

A phosphoramidite having an introduced fluorine-containing group was coupled with a single-stranded RNA having a G4 structure, thereby synthesizing a fluorine-containing G4 compound composed of a single-stranded RNA having a G4 structure modified with a fluorine-containing group, and the effect of this compound on the fluorescence intensity of the red fluorescence emitted from PpIX upon irradiation with blue visible light was investigated.

### (1) Synthesis of EEA-CH₂-amidite

Using the synthesis reaction shown below, EEA-CH₂OH (compound (1)) and 2-cyanoethyldiisopropylchlorophosphoramidite (compound (2)) were coupled together to synthesize a phosphoramidite (EEA-CH₂-amidite).

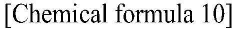

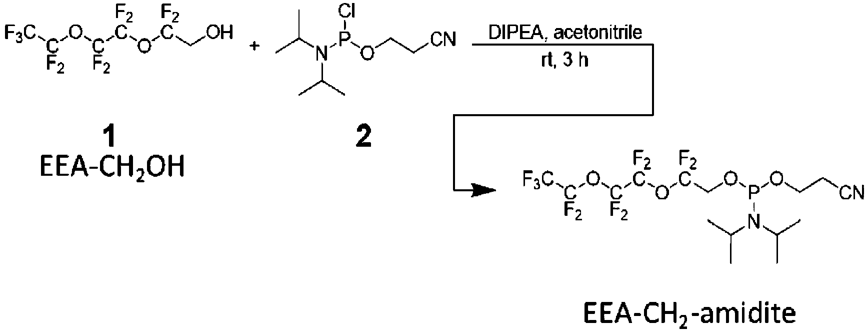

EEA-CH₂OH (276 mg, 0.83 mM) was reacted with 2-cyanoethyldiisopropylchlorophosphoramidite (compound (2): 0.18 mL, 0.87 mM, 1.05 equivalents) in the presence of N,N-diisopropylethylamine (DIPEA: 0.57 mL, 3.32 mM, 4 equivalents) using acetonitrile as a solvent at room temperature for 3 hours to obtain a phosphoramidite derivative compound (400 mg, yield: 90% by mass).

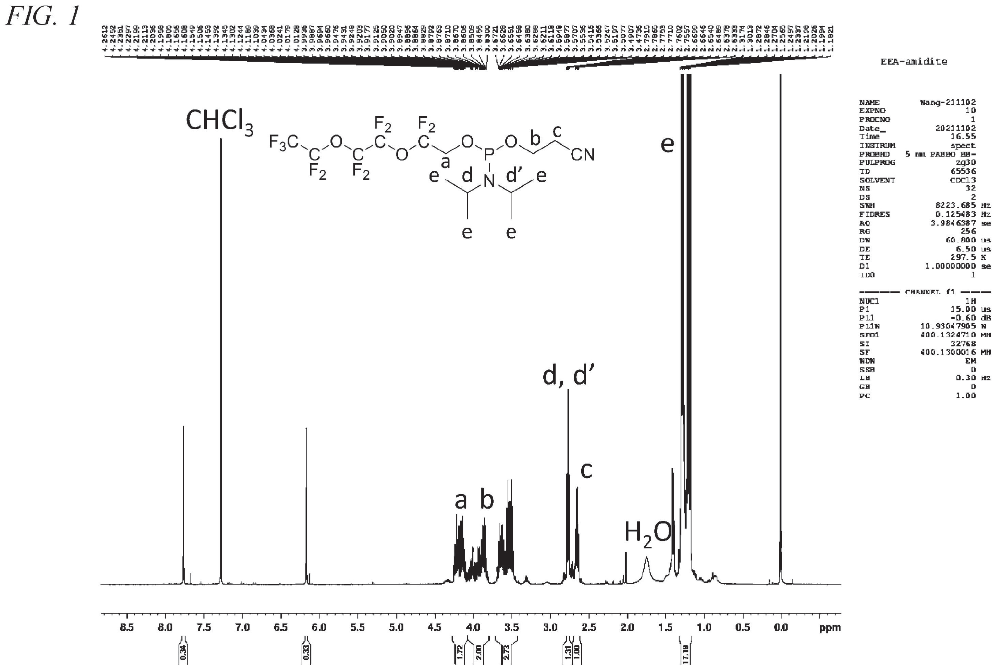

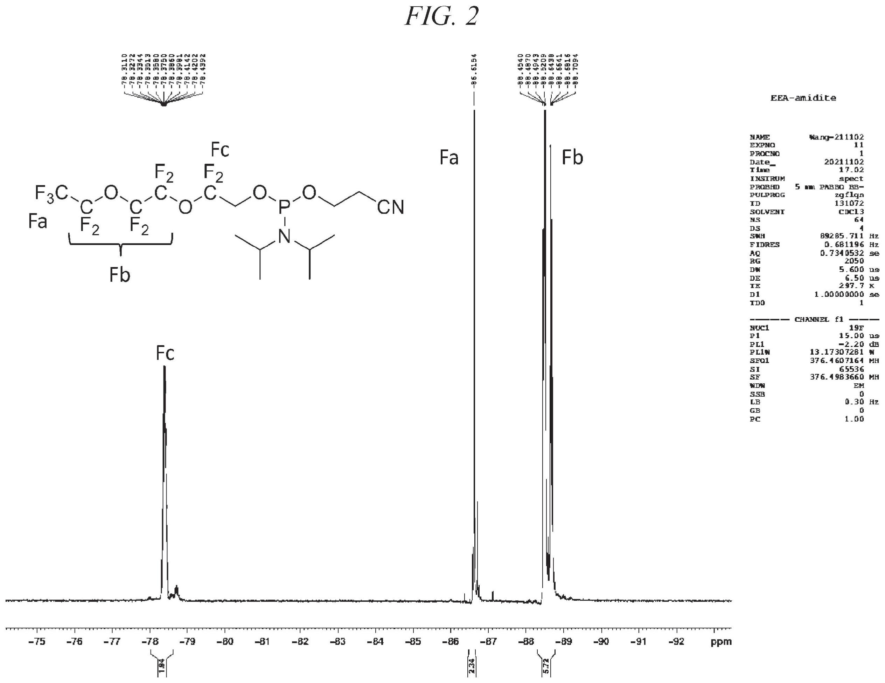

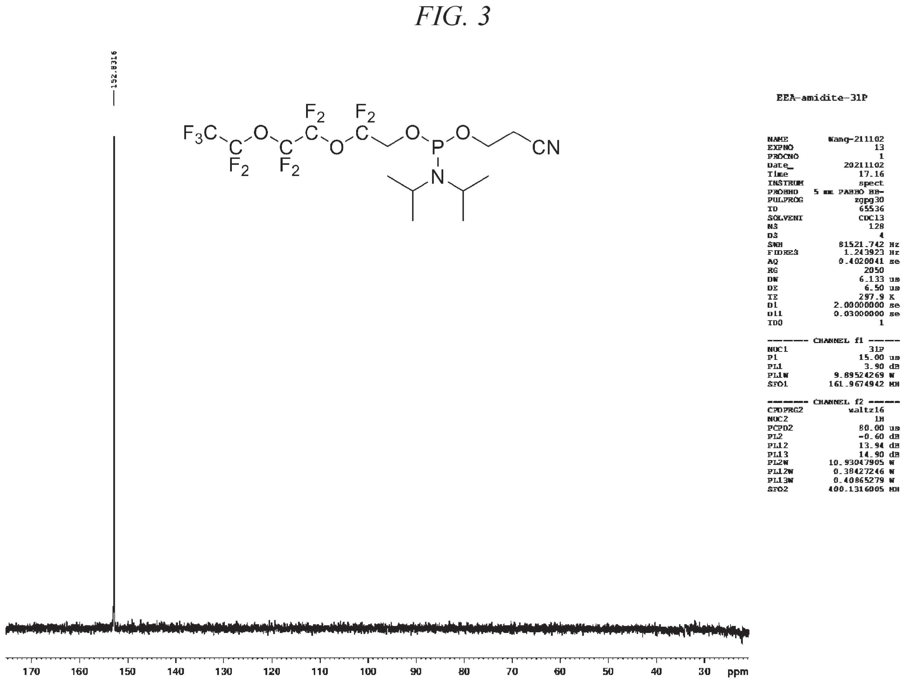

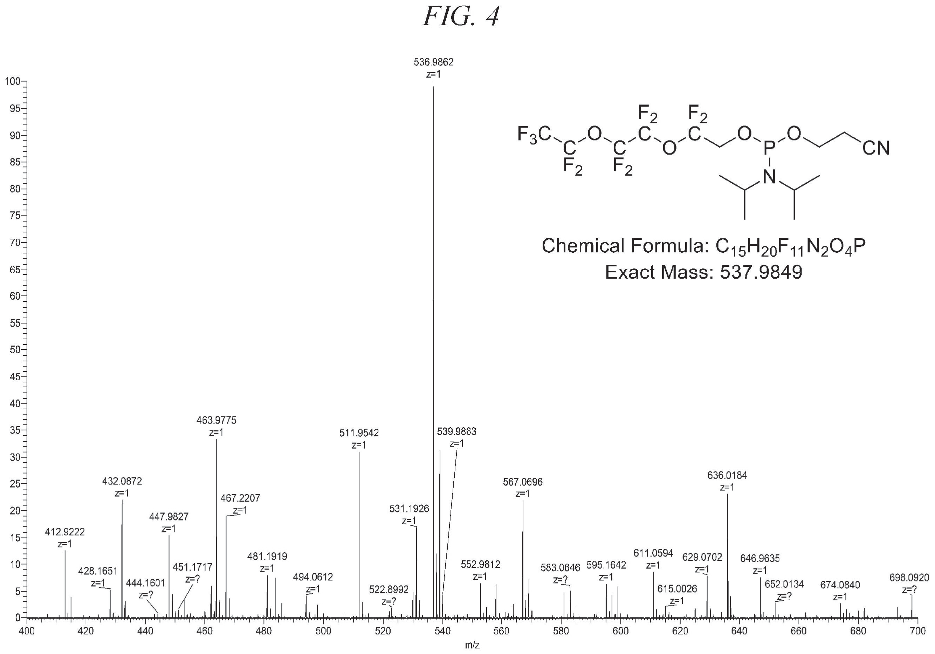

The ¹H, ¹⁹F, and ³¹P NMR spectral charts of the synthesized phosphoramidite derivative compound are shown in FIGS. 1 to 3 respectively. The HR-Mass result of the phosphoramidite derivative compound is shown in FIG. 4. This result detected a peak consistent with the molecular weight (536.9862) of the expected amidite derivative compound. These results confirmed that the synthesized phosphoramidite derivative compound was the target EEA-CH₂-amidite.

### (2) Synthesis of EEA-(UAGGGU)₄RNA

A D-type single-stranded RNA ((UAGGGU)₄) having a G4 structure and the EEA-CH₂-amidite were bound together using the phosphoramidite method, thus synthesizing a fluorine-containing G4 compound (EEA-(UAGGGU)₄RNA).

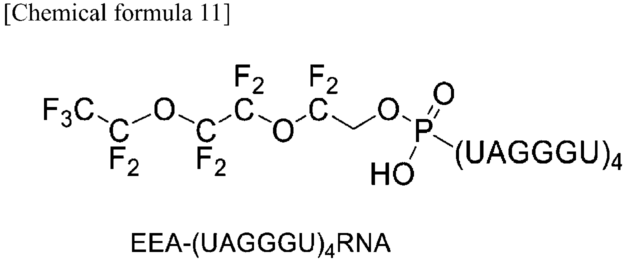

First, a fluorine-containing oligomer RNA (EEA-(UAGGGU)₄) was synthesized using a DNA/RNA automated synthesizer. Subsequently, AMA (28% aqueous solution of ammonia : methylamine = 1:1 (volumetric ratio)) was added to the CPG (Controlled Pore Glass) support of the automated synthesizer to cleave the synthesized fluorine-containing oligomer RNA. The AMA solution containing the dissolved fluorine-containing oligomer RNA was incubated at 65°C for 10 minutes to deprotect the nucleic acid bases. Next, dimethyl sulfoxide (DMSO), triethylamine (TEA), and triethylamine trihydrofluoride (TEA·3HF) were added to the fluorine-containing oligomer RNA, and the resulting mixture was incubated in a dry bath incubator at 65°C for 2.5 hours to deprotect the tert-butyldimethylsilyl groups (TBDS) of the fluorine-containing oligomer RNA. Subsequently, the solvent was removed, and the residue was dissolved in sterile water and then subjected to a simple purification using a Glen-Pak cartridge to obtain a crude product. This crude product was treated with reverse-phase HPLC (High Performance Liquid Chromatography) to purify the target fluorine-containing oligomer RNA (EEA-(UAGGGU)₄RNA).

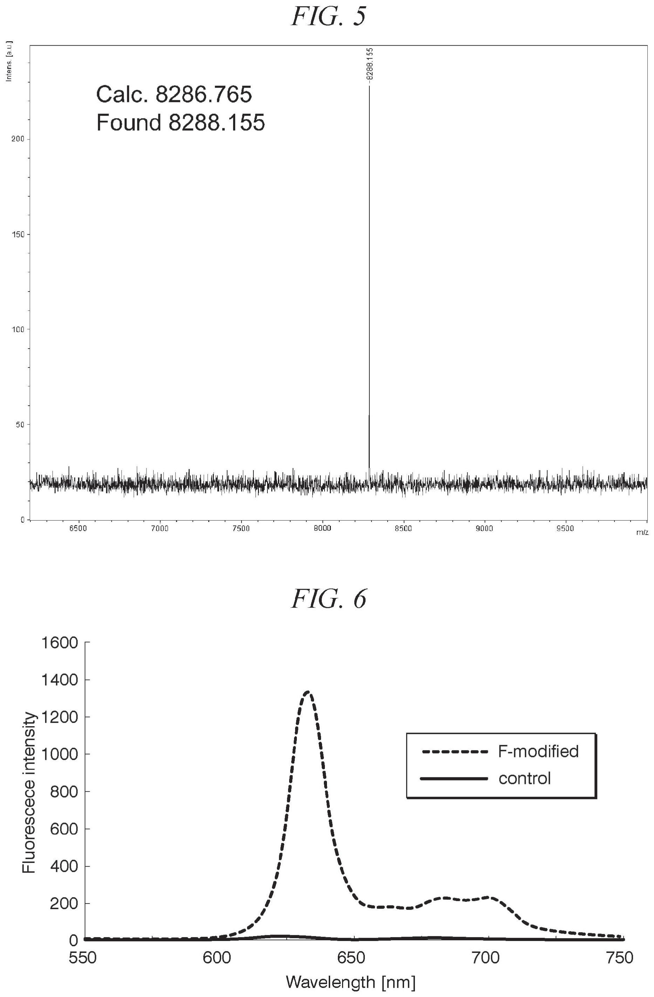

The thus obtained fluorine-containing oligomer RNA was analyzed by MALDI-TOF MS (Matrix-assisted laser desorption/ionization time-of-flight mass spectrometry). The analysis results are shown in FIG. 5.

### (3) Measurement of PpIX Fluorescence Emission Spectrum

An aqueous solution prepared by adding KCl (final concentration:100 mM) and K-PO₄ (final concentration: 20 mM) to an ultrapure water that had been subjected to autoclave sterilization was used as the reaction buffer. The fluorine-containing oligomer RNA (EEA-(UAGGGU)₄RNA) was added to this reaction buffer in an amount sufficient to yield a final concentration of 10 µM, and the total sample volume was adjusted to 200 µL. A control sample was also prepared with no added RNA.

After annealing each sample, PpIX (final concentration: 1 µM) dissolved in DMSO was added thereto, and the sample was incubated at room temperature in the dark for two hours. Following incubation, each sample was placed in the cell of a fluorophotometer, and the fluorescence emission spectrum was measured using a spectrofluorometer.

The results of the fluorescence emission spectroscopy measurements are shown in FIG. 6. In the sample containing the added EEA-(UAGGGU)₄RNA (labeled "F-modified" in the figure), a significant peak derived from PpIX was detected at a wavelength in the vicinity of 630 nm compared with the control sample containing no added RNA (labeled "control" in the figure). Based on these results, it was evident that the EEA-(UAGGGU)₄RNA enhances the fluorescence intensity derived from PpIX.

### (4) Effect of EEA-(UAGGGU)₄RNA on PpIX Fluorescence in the Presence of RNAase

Two samples (test groups 1 and 3) were prepared by adding the fluorine-containing oligomer RNA (EEA-(UAGGGU)₄RNA) to the reaction buffer used in (3) above in an amount sufficient to yield a final concentration of 10 µM, and one sample (test group 2) was prepared containing only the reaction buffer.

After conducting annealing of each sample, a solution of PpIX (final concentration: 1 µM) dissolved in DMSO was added. Further, RNase A was added only to the sample of test group 1. The samples were then incubated in a dry bath incubation chamber at 37°C for two hours.

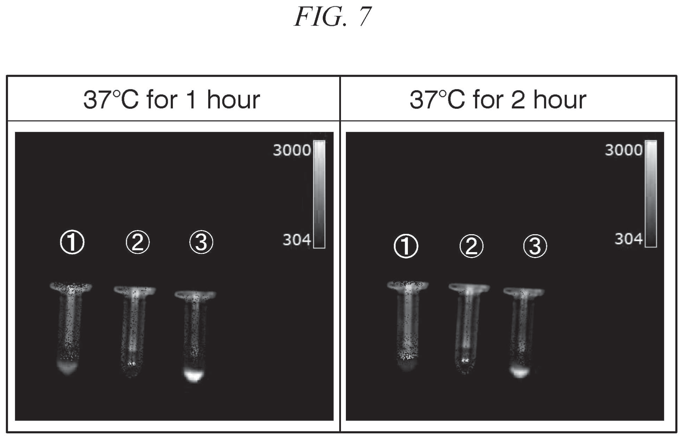

The fluorescence intensity of each sample was measured one hour after and two hours after the start of incubation using an in vivo imaging system (Lumazone, manufactured by Shoshin EM Corporation). Moreover, 405 nm/625 nm filters were used as the excitation/emission filters. The fluorescence intensity was quantified using imaging software (from Intelligent Imaging Innovations Ltd.). The measurement results are shown in FIG. 7. In the sample of test group 1 (labeled "1" in the figure), to which the RNA-cleaving enzyme RNase A had been added, fading of the fluorescence was measured from one hour after the start of incubation, and almost no fluorescence was measured after two hours. In the sample of test group 3 (labeled "3" in the figure), to which RNase A had not been added, strong fluorescence was observed one hour after the start of incubation, and fluorescence continued to be measured even after two hours. In the sample of test group 2 (labeled "2" in the figure), to which only PpIX had been added, almost no fluorescence was detected at both one hour after and two hours after the start of incubation. The fading of the fluorescence in the sample of test group 1 indicates that the EEA-(UAGGGU)₄RNA was cleaved by the RNase A, making the G4 structure unstable, resulting in further decomposition of PpIX and a decrease in the fluorescence intensity. Based on these results, it was evident that EEA-(UAGGGU)₄RNA binds to PpIX and enhances the intensity of the red fluorescence derived from PpIX. Table 1 lists the conditions and fluorescence intensity results of each test group.

**[Table 1]**

| | Oligomer RNA | RNase A | Fluorescence intensity |
|---|---|---|---|
| Test group 1 | EEA-(UAGGGU)₄RNA | present | Faded after 2 hours |
| Test group 2 | none | none | Almost none measured |
| Test group 3 | EEA-(UAGGGU)₄RNA | none | Strong fluorescence observed even after 2 hours |

### (5) Structural Analysis of Binding between EEA-(UAGGGU)₄RNA and PpIX

Four samples were prepared by adding a fluorine-containing oligomer RNA (EEA-(UAGGGU)₄RNA) to the reaction buffer used in (3) above in an amount sufficient to yield a final concentration of 0.8 mM.

After conducting annealing of each sample, a solution of PpIX dissolved in DMSO was added in an amount sufficient to yield a final concentration of 0, 0.8, 1.6, or 4.0 mM. The samples were then left to stand overnight at 4°C. Subsequently, D₂O was added to each sample, each sample was placed in an NMR measurement tube, and a superconducting nuclear magnetic resonance (NMR) device was used to measure the ¹H-NMR spectrum at room temperature.

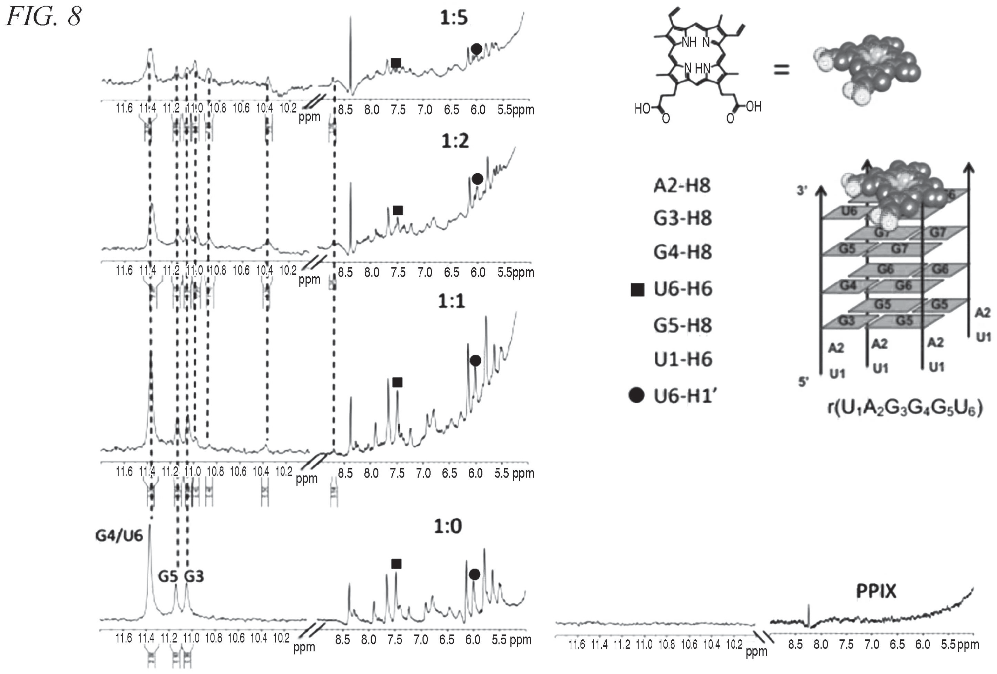

The results of the ¹H-NMR signal measurements for each sample are shown in FIG. 8. Among the four spectra shown in the figure, the label "1:0" indicates the result of the sample containing no added PpIX (PpIX concentration: 0 mM), the label "1:1" indicates the result of the sample having a PpIX concentration of 0.8 mM, the label "1:2" indicates the result of the sample having a PpIX concentration of 1.6 mM, and the label "1:5" indicates the result of the sample having a PpIX concentration of 4.0 mM. As illustrated in FIG. 8, as the concentration of PpIX is increased, the H6 and H1' peaks of the uracil (U) base decrease. Based on these results, it was evident that the PpIX binds to the U base position at the 5'-end of the G4 structure.

Based on the obtained structural analysis results, a molecular modeling structure of the binding between the EEA-(UAGGGU)₄RNA and PpIX was simulated using Discovery Studio 4.5 (from BIOVIA Inc.). Based on these results, it was clear that PpIX binds to the 5'-end of the G4 structure.

Furthermore, molecular dynamics simulations were also conducted for the binding between EEA-(UAGGGU)₄RNA and PpIX. The molecular dynamics simulations revealed that the potential energy of 5'-end binding was considerably lower than that of side binding, indicating more stable binding.

### [Example 2]

The compound 5-ALA and the EEA-(UAGGGU)₄RNA synthesized in Example 1 were introduced into cells of the breast cancer cell line 4T1 (obtained from JCRB Cell Bank), and the fluorescence intensity in each group of cells was investigated.

The breast cancer cells were cultured at 37°C in a humidified atmosphere (5% by volume of CO₂) using Dulbecco's Modified Eagle Medium (DMEM) as the culture medium.

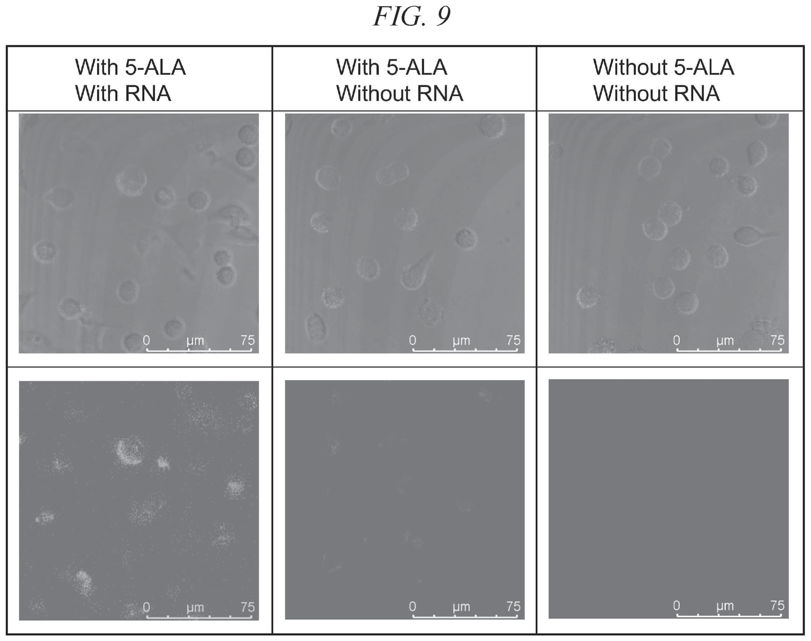

The cells were seeded in three 35 mm glass-bottom dishes at a rate of 5 × 10⁴ cells per dish, and were cultured for 24 hours to allow the cells to adhere and proliferate (pre-culture). Subsequently, 5 mM of 5-ALA was added to the culture medium of two of the three dishes (test group 1 and test group 2), while nothing was added to the culture medium of the remaining one dish (test group 3). After subsequent culturing for 21 hours, the culture medium was removed from each dish using an aspirator. Next, 1 µM of EEA-(UAGGGU)₄RNA was added to the culture medium of one of the three dishes (test group 1), while nothing was added to the remaining two dishes (test group 2 and test group 3). Subsequently, after culturing for an additional 24 hours, fluorescence images of the cells in each dish were acquired using a confocal microscope using a laser excitation wavelength of 405 nm and a detector set to a fluorescence wavelength of 580 nm to 680 nm. The microscope images of each cell are illustrated in FIG. 9. In FIG. 9, the upper row represents bright field images, and the lower row represents fluorescence images.

As illustrated in FIG. 9, in the cells of test group 2, to which only 5-ALA had been added, almost no red fluorescence derived from PpIX was observed, similar to the cells of test group 3 to which 5-ALA had not been added. In contrast, in the cells of test group 1, to which 5-ALA was added together with EEA-(UAGGGU)₄RNA, strong red fluorescence derived from PpIX was observed. These results confirmed that EEA-(UAGGGU)₄RNA enhances the red fluorescence derived from PpIX accumulated in cancer cells.

### [Example 3]

Using a mouse cancer model, tumors in the bodies of the animals were visualized using 5-ALA and the EEA-(UAGGGU)₄RNA synthesized in Example 1.

Nude mice (6 weeks old, female) were injected subcutaneously with cells of the breast cancer cell line 4T1 (8 × 10⁵ cells/mouse). One week after transplantation, a subcutaneous tumor was confirmed, and 5-ALA (5 mg/mouse) was administered. Subsequently, EEA-(UAGGGU)₄RNA (0.3 mg/mouse) was administered. Both the 5-ALA and the EEA-(UAGGGU)₄RNA were injected subcutaneously in the form of a solution dissolved in physiological saline. Control mice were administered only 5-ALA. The mice were dissected, and the red fluorescence intensity in each tissue was measured using an in vivo imaging system (Lumazone, manufactured by Shoshin EM Corporation) in a similar manner to Example 1.

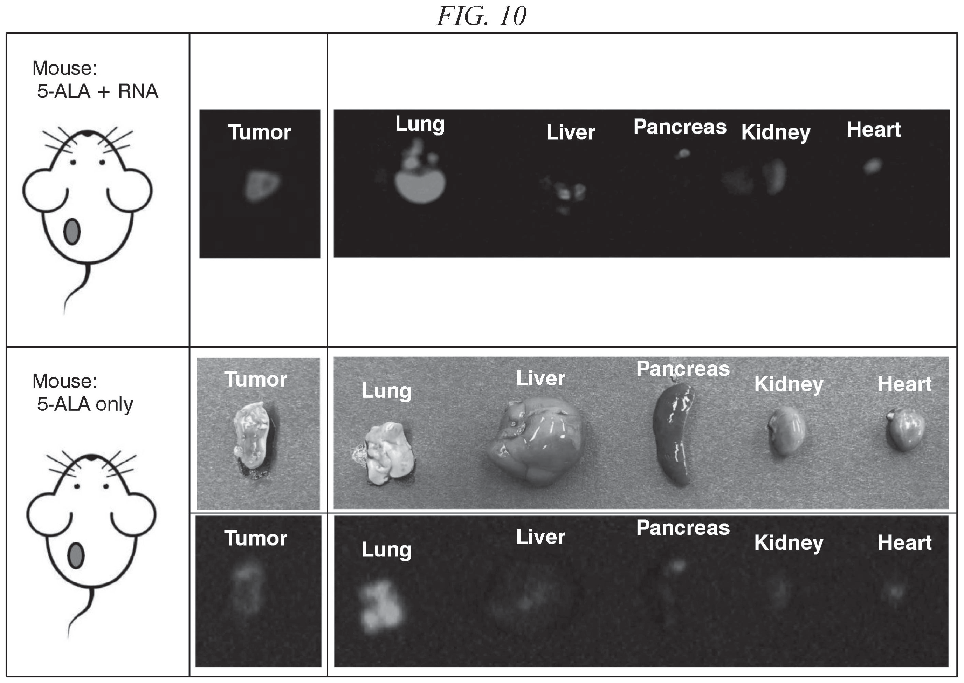

Transmitted light images and red fluorescence images of each tissue are shown in FIG. 10. The intensity of the red fluorescence emitted from tumor tissue was clearly enhanced in the mice administered with 5-ALA together with EEA-(UAGGGU)₄RNA compared with the mice administered with only 5-ALA. In this experiment, even though the dose of EEA-(UAGGGU)₄RNA was very small at 0.3 mg/mouse, a red fluorescence intensity enhancement effect was observed, indicating that a fluorescence enhancer composed of the fluorine-containing G4 compound according to the present invention is extremely effective.

### [Example 4]

A phosphoramidite containing three types of introduced fluorine-containing groups, and a D-type single-stranded RNA having a G4 structure were coupled together to synthesize a fluorine-containing G4 compound composed of a single-stranded RNA having a G4 structure modified with fluorine-containing groups.

### (1) Synthesis of EEEA-CH₂-amidite

Using the synthesis reaction shown below, EEEA-CH₂OH (compound (3)) and 2-cyanoethyldiisopropylchlorophosphoramidite (compound (2)) were coupled together to synthesize a phosphoramidite (EEEA-CH₂-amidite).

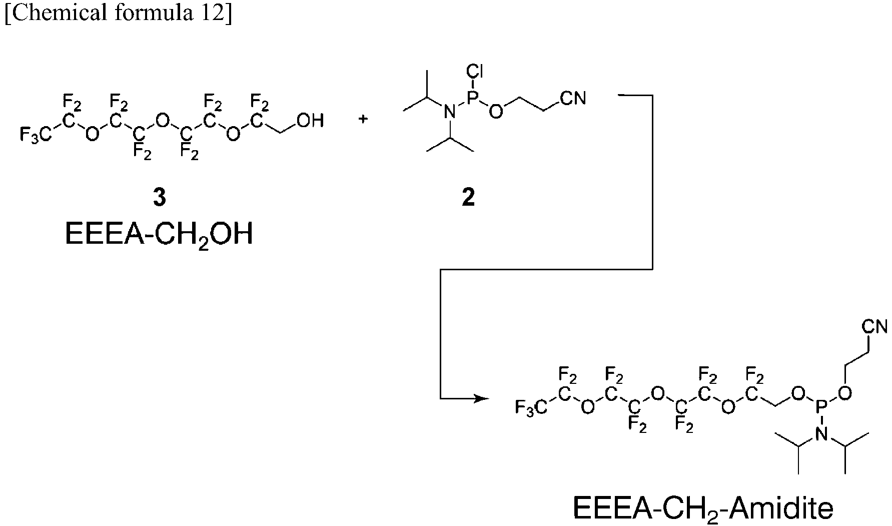

EEEA-CH₂OH (250 mg, 0.65 mM) was reacted with 2-cyanoethyldiisopropylchlorophosphoramidite (compound (2): 0.19 mL, 0.49 mM, 1.1 equivalents) in the presence of DIPEA (0.232 mL, 1.34 mM, 3 equivalents) using acetonitrile as a solvent at room temperature for 3 hours, thereby obtaining a phosphoramidite derivative compound (105 mg, yield: 80% by mass).

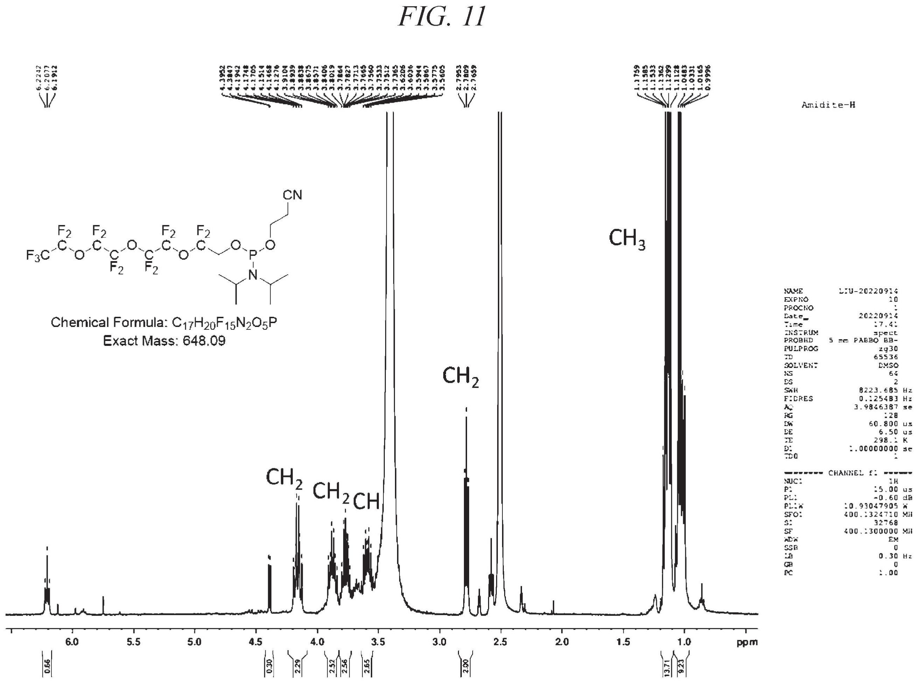

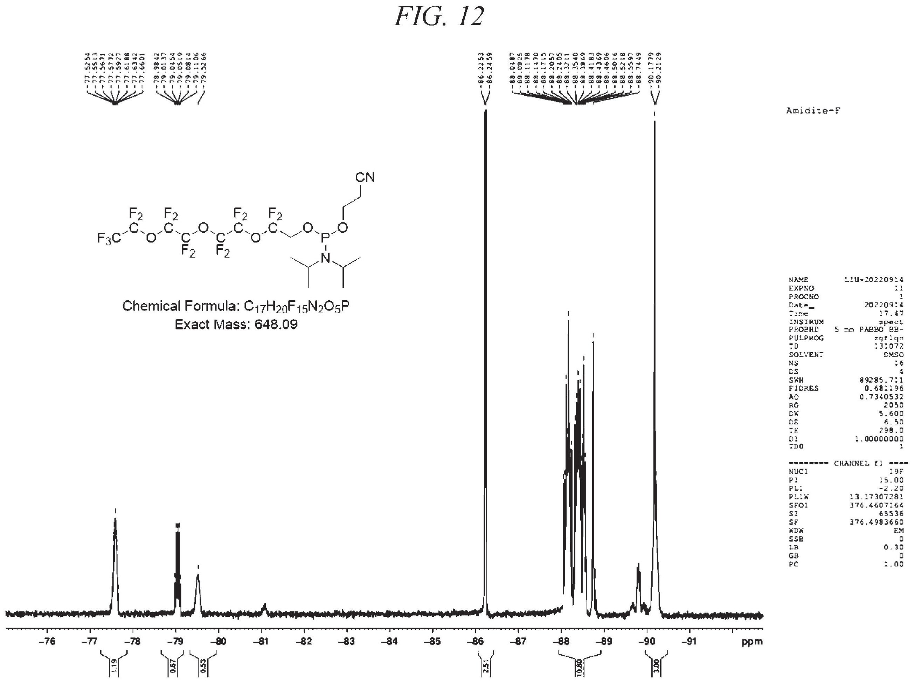

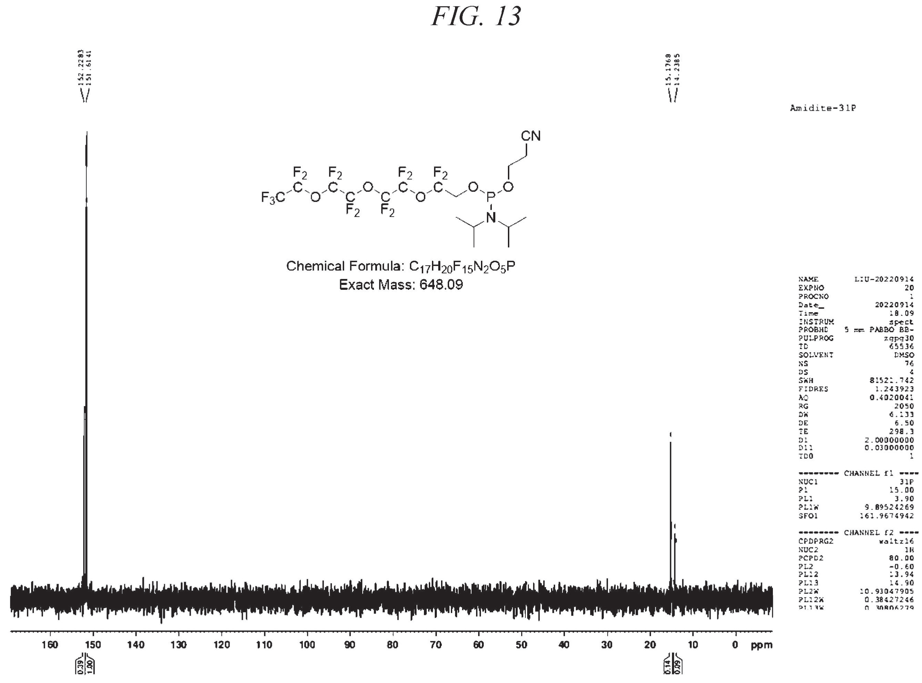

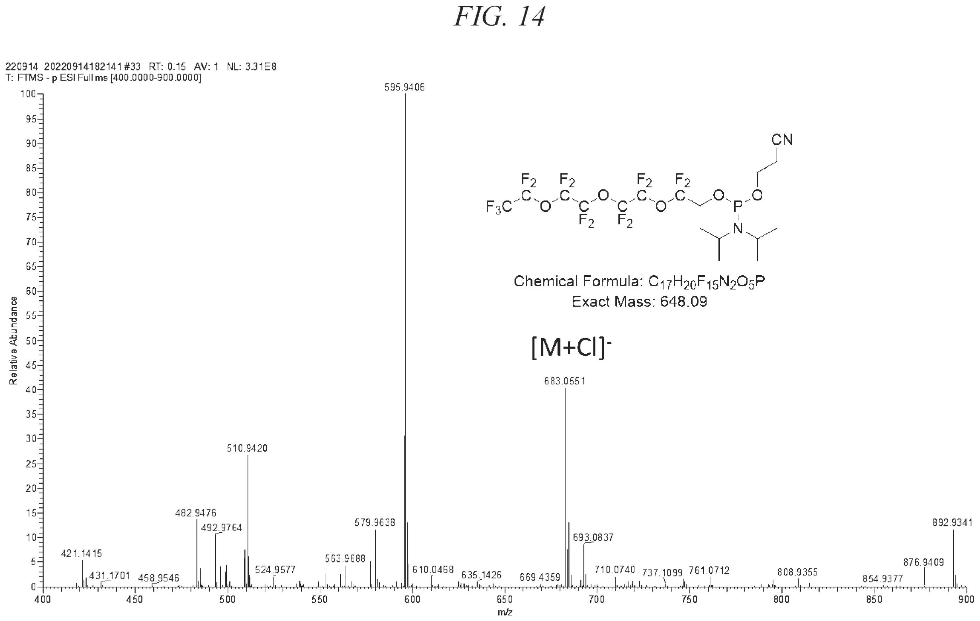

The ¹H, ¹⁹F, and ³¹P NMR spectral charts of the synthesized phosphoramidite derivative compound are shown in FIGS. 11 to 13 respectively. The HR-Mass result of the phosphoramidite derivative compound is shown in FIG. 14. This result detected a peak consistent with the molecular weight (648.09) of the expected amidite derivative compound. These results confirmed that the synthesized phosphoramidite derivative compound was the target EEEA-CH₂-amidite.

### (2) Synthesis of EEEA-(UAGGGU)₄RNA

A D-type single-stranded RNA ((UAGGGU)₄) having a G4 structure and the EEEA-CH₂-amidite were bound together using the phosphoramidite method, thus synthesizing a fluorine-containing G4 compound (EEEA-(UAGGGU)₄RNA).

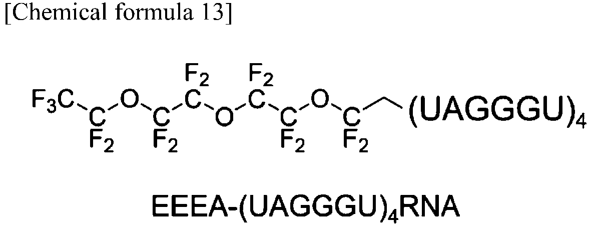

First, a fluorine-containing oligomer RNA (EEEA-(UAGGGU)₄) was synthesized using a DNA/RNA automated synthesizer. Subsequently, AMA (28% aqueous solution of ammonia : methylamine = 1:1 (volumetric ratio)) was added to the CPG support of the automated synthesizer to cleave the synthesized fluorine-containing oligomer RNA. The AMA solution containing the dissolved fluorine-containing oligomer RNA was incubated at 65°C for 10 minutes to deprotect the nucleic acid bases. Next, DMSO, TEA and TEA·3HF were added to the fluorine-containing oligomer RNA, and the resulting mixture was incubated in a dry bath incubator at 65°C for 2.5 hours to deprotect the TBDS groups of the fluorine-containing oligomer RNA. Subsequently, the solvent was removed, and the residue was dissolved in sterile water and then subjected to a simple purification using a Glen-Pak cartridge to obtain a crude product. This crude product was treated with reverse-phase HPLC to purify the target fluorine-containing oligomer RNA (EEEA-(UAGGGU)₄RNA).

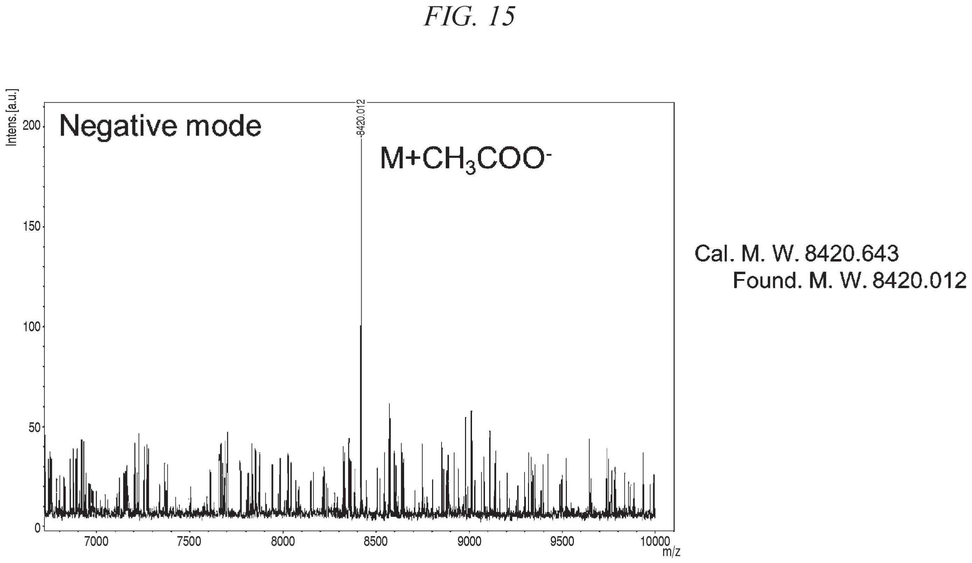

The thus obtained fluorine-containing oligomer RNA was analyzed by MALDI-TOF MS. The analysis results are shown in FIG. 15.

### (3) Synthesis of BEA-CH₂-amidite

Using the synthesis reaction shown below, BEA-CH₂OH (compound (4)) and 2-cyanoethyldiisopropylchlorophosphoramidite (compound (2)) were coupled together to synthesize a phosphoramidite (BEA-CH₂-amidite).

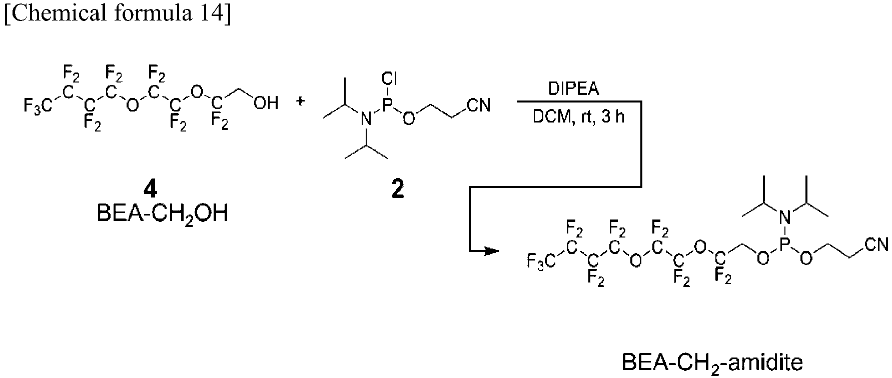

BEA-CH₂OH (300 mg, 0.69 mM) was reacted with 2-cyanoethyldiisopropylchlorophosphoramidite (compound (2): 0.22 mL, 0.66 mM, 1.1 equivalents) in the presence of DIPEA (0.3 mL, 1.80 mM, 3 equivalents) using acetonitrile as a solvent at room temperature for 3 hours, thereby obtaining a phosphoramidite derivative compound (110 mg, yield: 30% by mass).

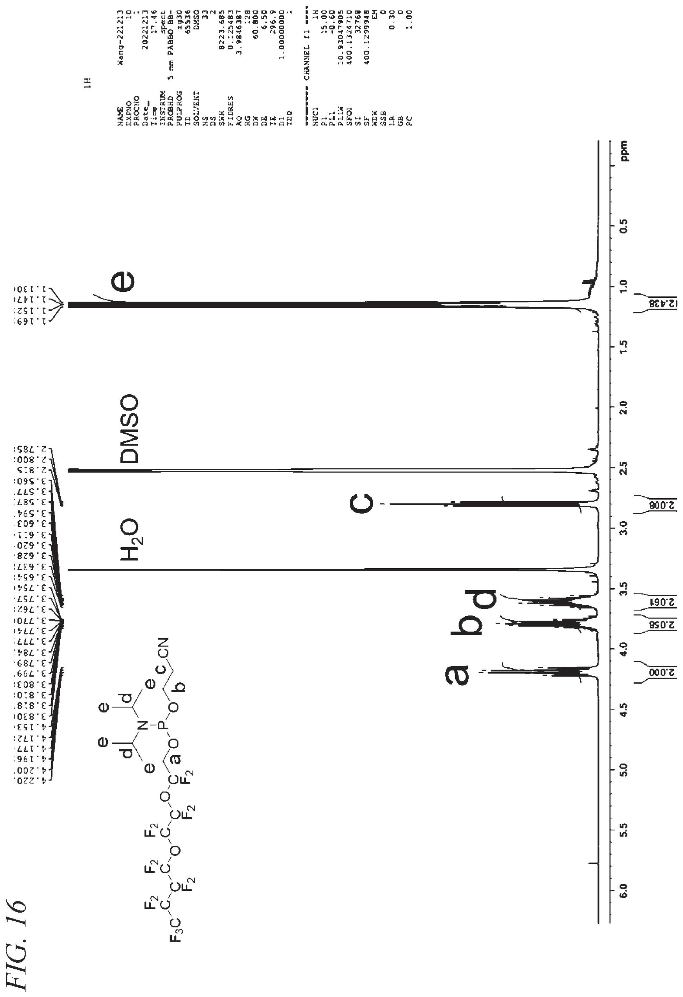

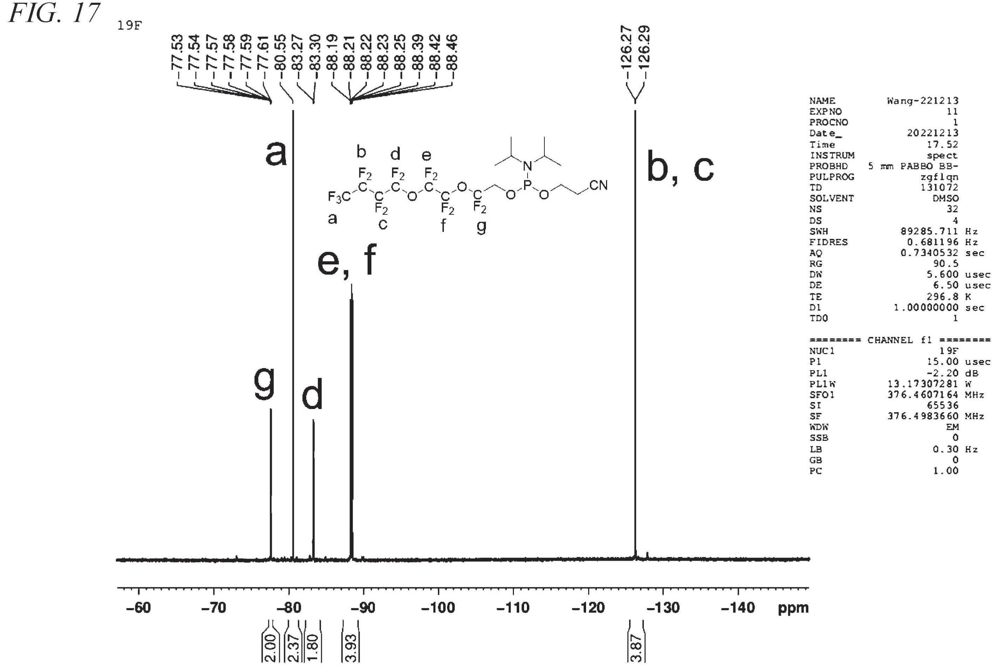

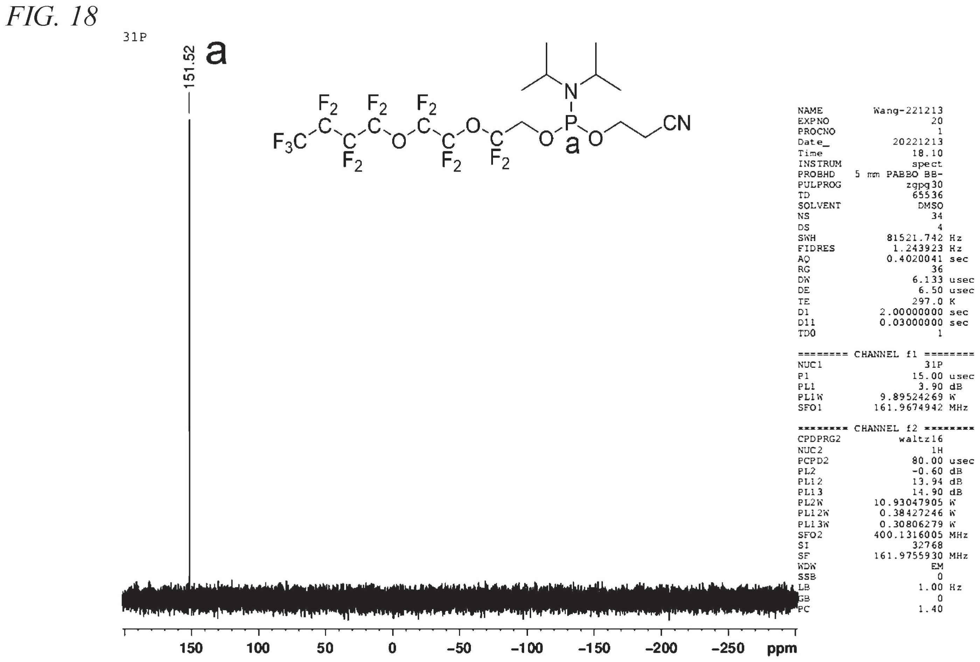

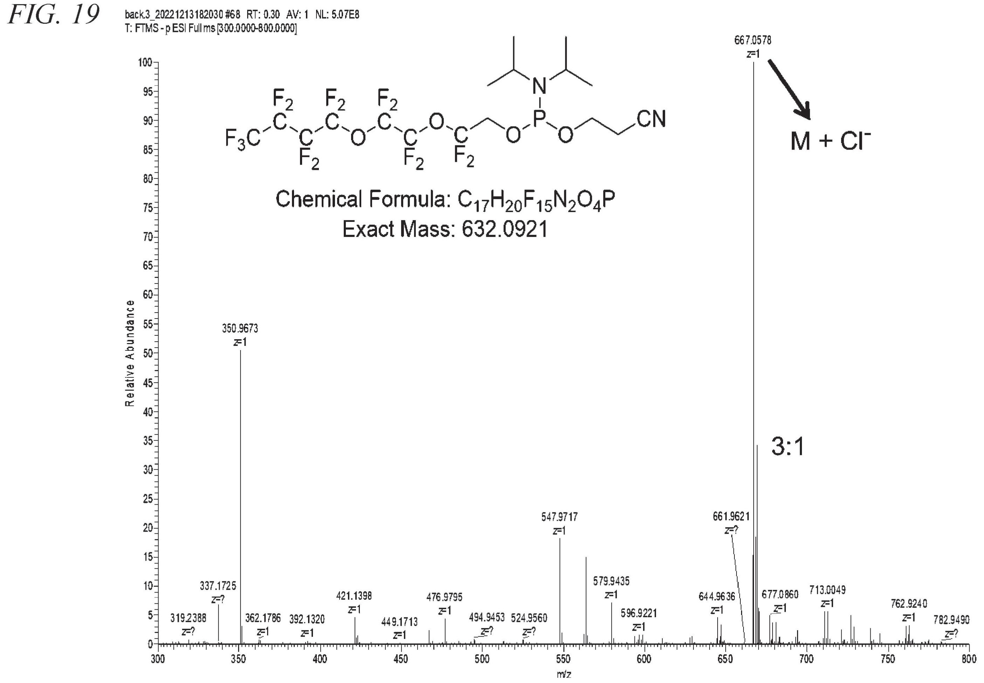

The ¹H, ¹⁹F, and ³¹P NMR spectral charts of the synthesized phosphoramidite derivative compound are shown in FIGS. 16 to 18 respectively. The HR-Mass result of the phosphoramidite derivative compound is shown in FIG. 19. This result detected a peak consistent with the molecular weight (632.0921) of the expected amidite derivative compound. These results confirmed that the synthesized phosphoramidite derivative compound was the target BEA-CH₂-amidite.

### (4) Synthesis of BEA-(UAGGGU)₄RNA

A D-type single-stranded RNA ((UAGGGU)₄) having a G4 structure and the BEA-CH₂-amidite were bound together using the phosphoramidite method, thus synthesizing a fluorine-containing G4 compound (BEA-(UAGGGU)₄RNA).

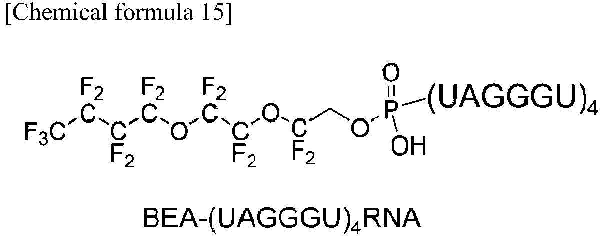

First, a fluorine-containing oligomer RNA (BEA-(UAGGGU)₄) was synthesized using a DNA/RNA automated synthesizer. Subsequently, using a similar procedure to that described in (2) above, the synthesized fluorine-containing oligomer RNA was cleaved from the automated synthesizer, and deprotection of the nucleic acid bases and deprotection of the TBDS groups were carried out, followed by carrying out a simple purification using a Glen-Pak cartridge and a main purification treatment using reverse-phase HPLC to purify the target fluorine-containing oligomer RNA (BEA-(UAGGGU)₄RNA).

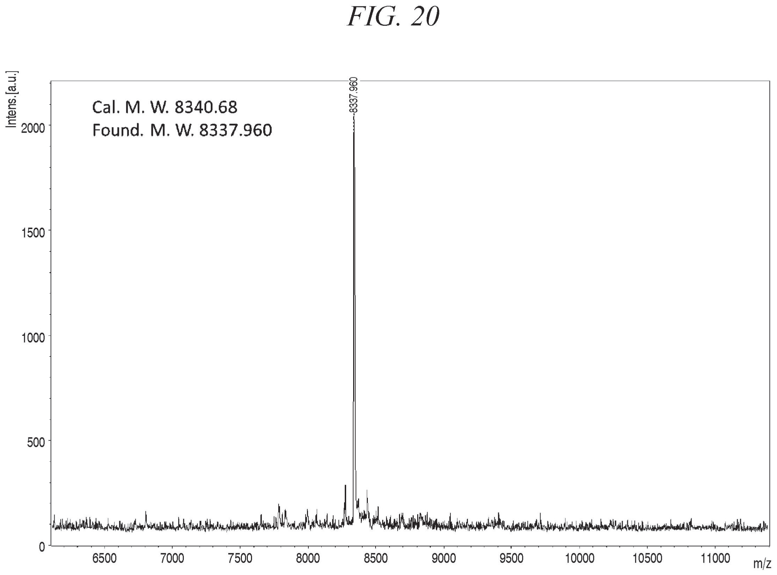

The thus obtained fluorine-containing oligomer RNA was analyzed by MALDI-TOF MS. The analysis results are shown in FIG. 20.

### (5) Synthesis of C5PE-CH₂-amidite

Using the synthesis reaction shown below, C5PE-CH₂OH (compound (5)) and 2-cyanoethyldiisopropylchlorophosphoramidite (compound (2)) were coupled together to synthesize a phosphoramidite (C5PE-CH₂-amidite).

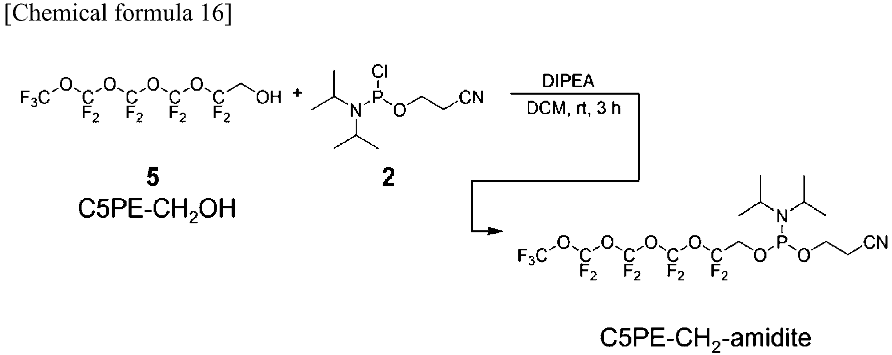

C5PE-CH₂OH (250 mg, 0.68 mM) was reacted with 2-cyanoethyldiisopropylchlorophosphoramidite (compound (2): 0.21 mL, 0.649 mM, 1.1 equivalents) in the presence of DIPEA (0.3 mL, 1.77 mM, 3 equivalents) using acetonitrile as a solvent at room temperature for 3 hours, thereby obtaining a phosphoramidite derivative compound (100 mg, yield: 30% by mass).

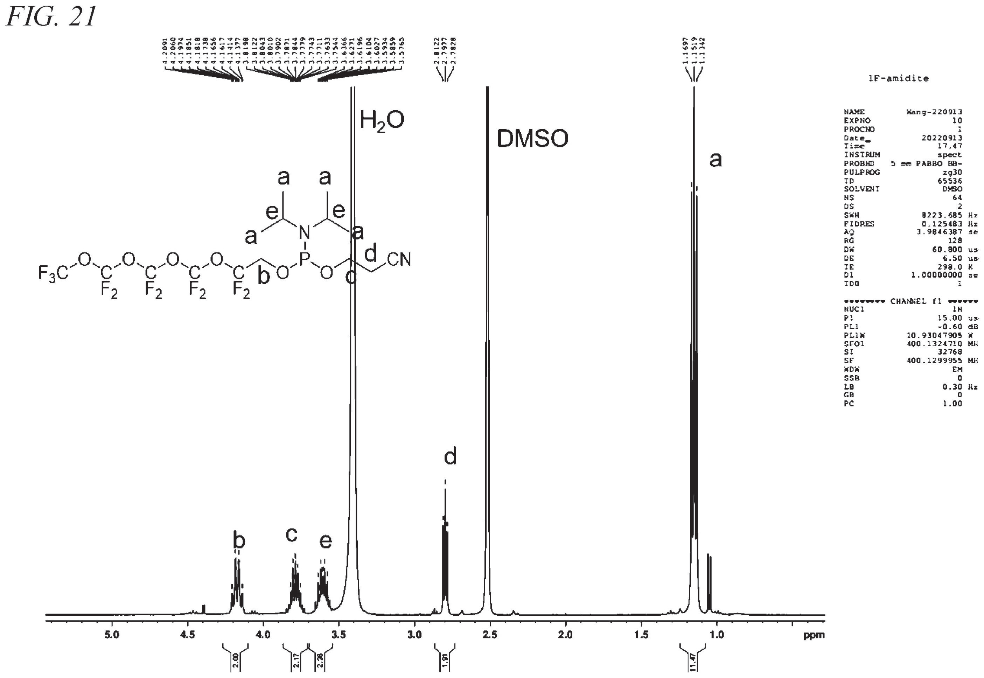

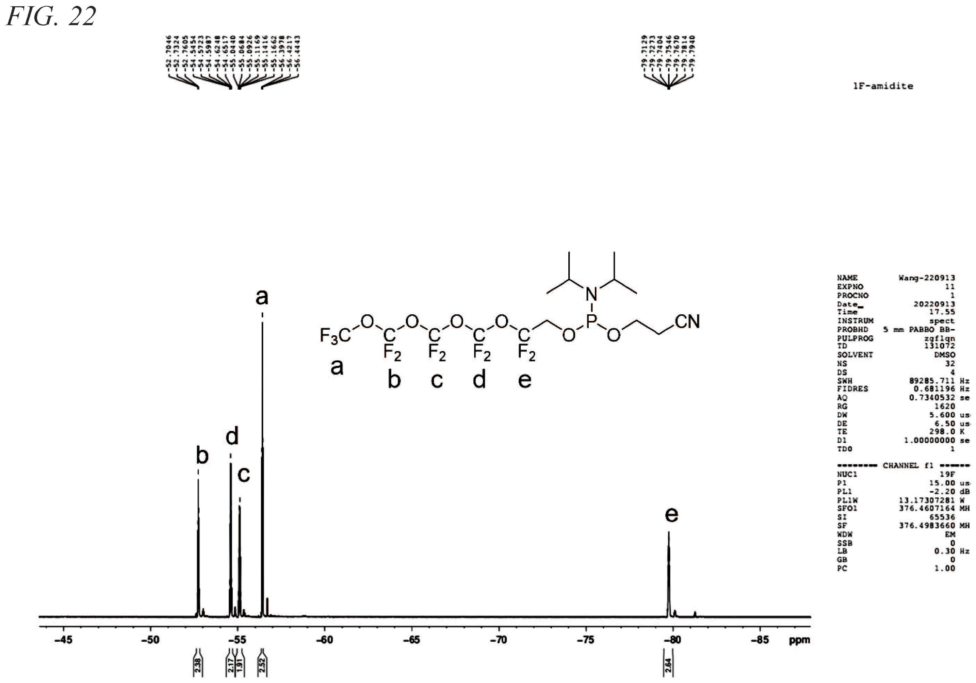

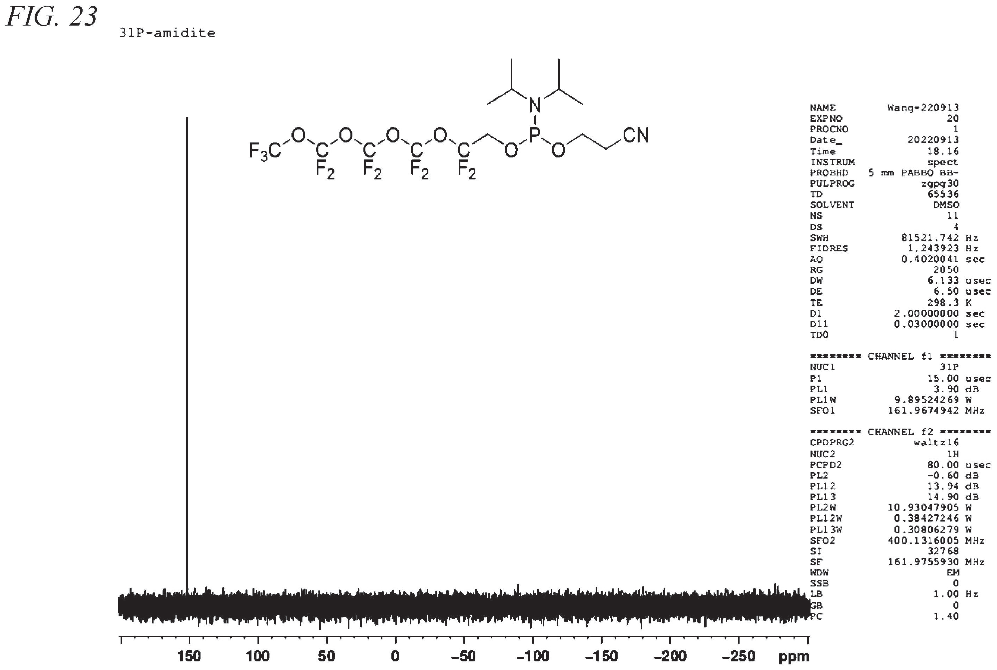

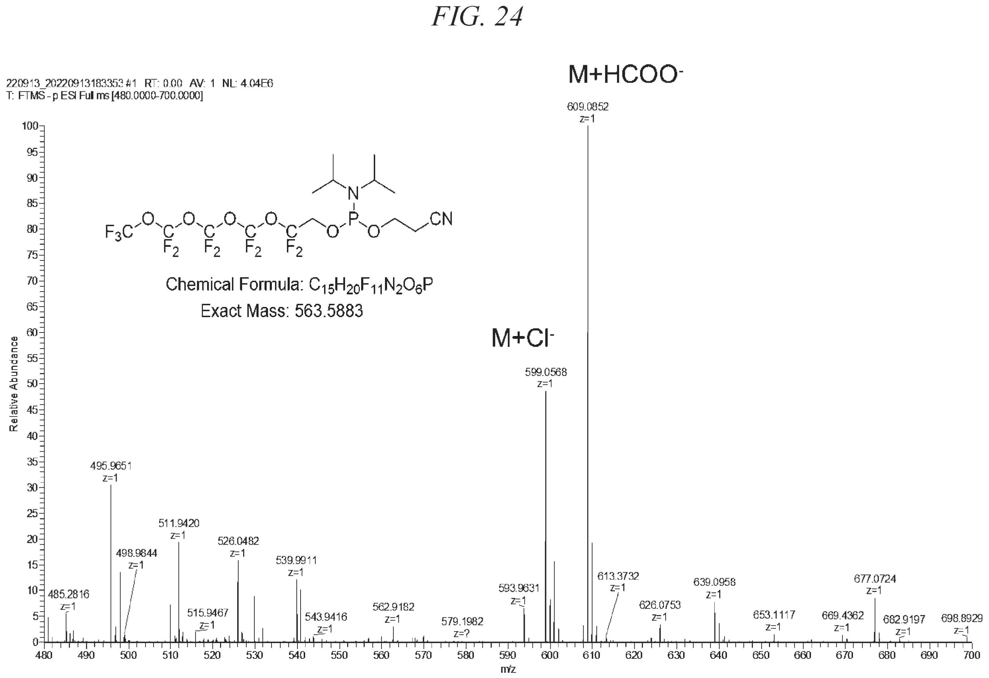

The ¹H, ¹⁹F, and ³¹P NMR spectral charts of the synthesized phosphoramidite derivative compound are shown in FIGS. 21 to 23 respectively. The HR-Mass result of the phosphoramidite derivative compound is shown in FIG. 24. This result detected a peak consistent with the molecular weight (563.5883) of the expected amidite derivative compound. These results confirmed that the synthesized phosphoramidite derivative compound was the target C5PE-CH₂-amidite.

### (6) Synthesis of C5PE-(UAGGGU)₄RNA

A D-type single-stranded RNA ((UAGGGU)₄) having a G4 structure and the C5PE-CH₂-amidite were bound together using the phosphoramidite method, thus synthesizing a fluorine-containing G4 compound (C5PE-(UAGGGU)₄RNA).

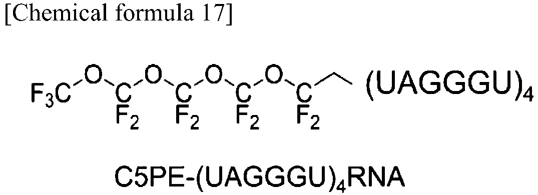

First, a fluorine-containing oligomer RNA (C5PE-(UAGGGU)₄) was synthesized using a DNA/RNA automated synthesizer. Subsequently, using a similar procedure to that described in (2) above, the synthesized fluorine-containing oligomer RNA was cleaved from the automated synthesizer, and then deprotection of the nucleic acid bases and deprotection of the TBDS groups were carried out, followed by carrying out a simple purification using a Glen-Pak cartridge and a main purification treatment using reverse-phase HPLC, thereby purifying the target fluorine-containing oligomer RNA (C5PE-(UAGGGU)₄RNA).

The thus obtained fluorine-containing oligomer RNA was analyzed by MALDI-TOF MS. The analysis results are shown in FIG. 20.

### (7) PpIX Fluorescence Emission Spectrum Measurements-1

The PpIX fluorescence emission spectrum was measured using three types of the synthesized fluorine-containing oligomer RNA (EEEA-(UAGGGU)₄RNA, BEA-(UAGGGU)₄RNA, and C5PE-(UAGGGU)₄RNA).

An aqueous solution prepared by adding KCl (final concentration:100 mM) and K-PO₄ (final concentration: 20 mM) to an ultrapure water that had been subjected to autoclave sterilization was used as the reaction buffer. The fluorine-containing oligomer RNA (EEEA-(UAGGGU)₄RNA, BEA-(UAGGGU)₄RNA, or C5PE-(UAGGGU)₄RNA) was added to this reaction buffer in an amount sufficient to yield a final concentration of 10 µM, and the total sample volume was adjusted to 200 µL. A control sample was also prepared with no added RNA.

After annealing each sample, PpIX (final concentration: 1 µM) dissolved in DMSO was added, and the sample was incubated at room temperature in the dark for two hours. Following incubation, each sample was placed in the cell of a fluorophotometer, and the fluorescence emission spectrum was measured using a spectrofluorometer.

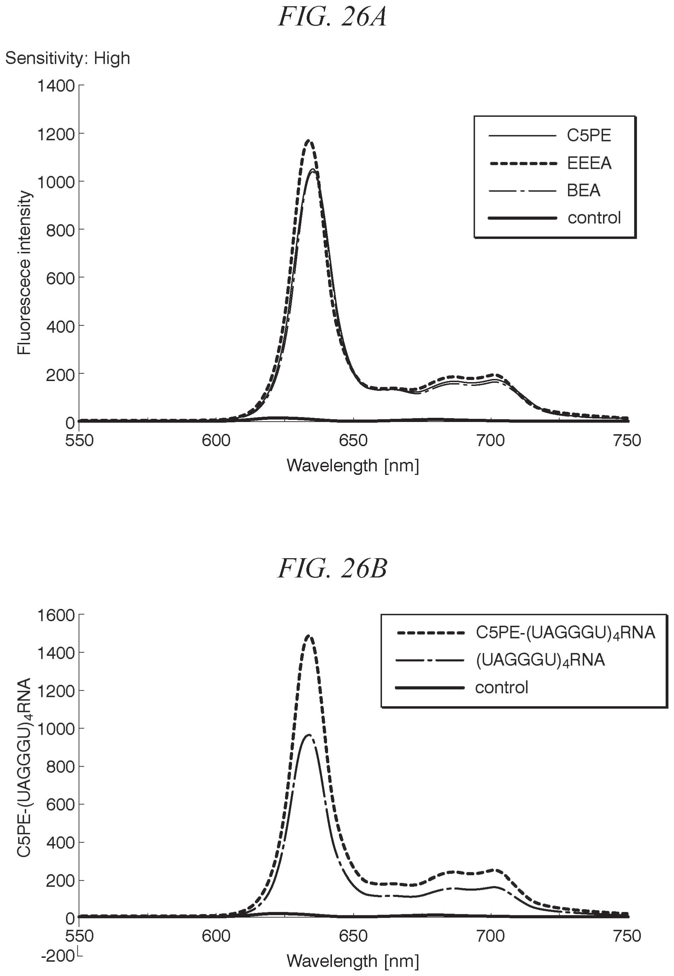

The results of the fluorescence emission spectroscopy measurements are shown in FIG. 26A. In the samples containing an added fluorine-containing oligomer RNA, regardless of the type of fluorine-containing oligomer RNA, a significant peak derived from PpIX was detected at a wavelength in the vicinity of 630 nm compared with the control sample containing no added RNA. Based on these results, it was evident that EEEA-(UAGGGU)₄RNA, BEA-(UAGGGU)₄RNA, and C5PE-(UAGGGU)₄RNA all enhance the fluorescence intensity derived from PpIX in a similar manner to that observed for EEA-(UAGGGU)₄RNA.

### (8) PpIX Fluorescence Emission Spectrum Measurements-2

With the exception of using C5PE-(UAGGGU)₄RNA or (UAGGGU)₄RNA as the oligomer RNA, measurements of the PpIX fluorescence emission spectrum were conducted in the same manner as (7) above.

The results of the fluorescence emission spectroscopy measurements are shown in FIG. 26B. In the sample containing the added fluorine-containing oligomer RNA (C5PE-(UAGGGU)₄RNA) and the sample containing the added oligomer RNA ((UAGGGU)₄RNA), a significant peak derived from PpIX was detected at a wavelength in the vicinity of 630 nm compared with the control sample containing no added RNA. Comparison of the sample containing the added fluorine-containing oligomer RNA (C5PE-(UAGGGU)₄RNA) and the sample containing the added oligomer RNA ((UAGGGU)₄RNA) revealed a more significant peak for the sample containing the added fluorine-containing oligomer RNA (C5PE-(UAGGGU)₄RNA). Based on these results, it was evident that oligomer RNA enhances the fluorescence intensity derived from PpIX regardless of whether or not the oligomer RNA has been modified with fluorine-containing groups, and that introduction of fluorine-containing groups further strengthens this enhancement effect on the fluorescence intensity derived from PpIX generated by oligomer RNA.

### [Example 5]

The compound 5-ALA and the C5PE-(UAGGGU)₄RNA synthesized in Example 4 were introduced into cells of the breast cancer cell line 4T1 (obtained from JCRB Cell Bank), and the fluorescence intensity in each group of cells was investigated.

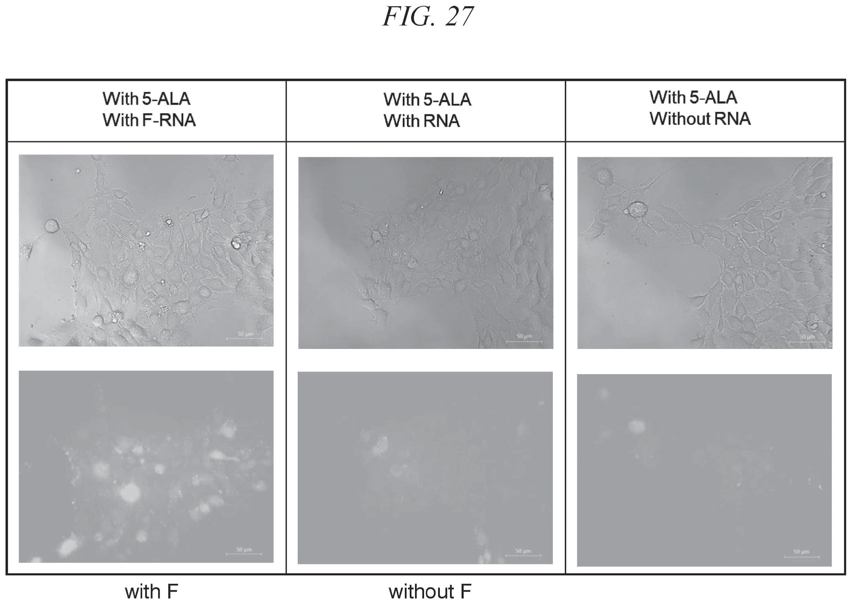

The cells were seeded in three 35 mm glass-bottom dishes at a rate of 5 × 10⁴ cells per dish, and were cultured for 24 hours to allow the cells to adhere and proliferate (pre-culture). Subsequently, 500 µM of 5-ALA was added to the culture medium of the three dishes, and culturing was continued for 21 hours. Following subsequent removal of the culture medium from each dish using an aspirator, 1 µM of C5PE-(UAGGGU)₄RNA was added to the culture medium of one of the three dishes (test group 1), and 1 µM of (UAGGGU)₄RNA was added to the culture medium of another one of the three dishes (test group 2), while nothing was added to the remaining dish (test group 3). Subsequently, after culturing for an additional 24 hours, fluorescence images of the cells in each dish were acquired using an all-in-one fluorescence microscope using a filter excitation wavelength set to 395 to 415 nm and a detector set to a fluorescence wavelength of 625 nm to 655 nm. The microscope images of each group of cells are illustrated in FIG. 27. In FIG. 27, the upper row represents bright field images, and the lower row represents fluorescence images.

As illustrated in FIG. 27, in the cells of test group 3, to which only 5-ALA had been added, almost no red fluorescence derived from PpIX was observed. In contrast, in the cells of test group 1 and test group 2, to which 5-ALA was added together with either C5PE-(UAGGGU)₄RNA or (UAGGGU)₄RNA respectively, strong red fluorescence derived from PpIX was observed. Comparison of the cells of test group 1 and test group 2 revealed stronger red fluorescence derived from PpIX in the cells of test group 1. Based on these results, it was evident that C5PE-(UAGGGU)₄RNA and (UAGGGU)₄RNA enhance the red fluorescence derived from PpIX accumulated in cancer cells, and that this enhancement of the red fluorescence derived from PpIX generated by oligomer RNA can be further enhanced by introducing fluorine-containing groups into the oligomer RNA.

### [Example 6]

A phosphoramidite containing three types of introduced fluorine-containing groups, and an L-type single-stranded RNA having a G4 structure were coupled together to synthesize a fluorine-containing G4 compound composed of a single-stranded RNA having a G4 structure modified with fluorine-containing groups. The effect of the thus obtained fluorine-containing G4 compound on PpIX fluorescence in the presence of RNAase was investigated.

### (1) Synthesis of L-type single-stranded RNA having a G4 structure (L-(UAGGGU)₄)

First, an L-type oligomer RNA (L-(UAGGGU)₄) was synthesized using a DNA/RNA automated synthesizer. Subsequently, using a similar procedure to that described above in (2) of Example 4, the synthesized fluorine-containing oligomer RNA was cleaved from the automated synthesizer, and following deprotection of the nucleic acid bases and deprotection of the TBDS groups, a simple purification using a Glen-Pak cartridge and a main purification treatment using reverse-phase HPLC were conducted, thereby purifying the target L-type oligomer RNA (L-(UAGGGU)₄RNA).

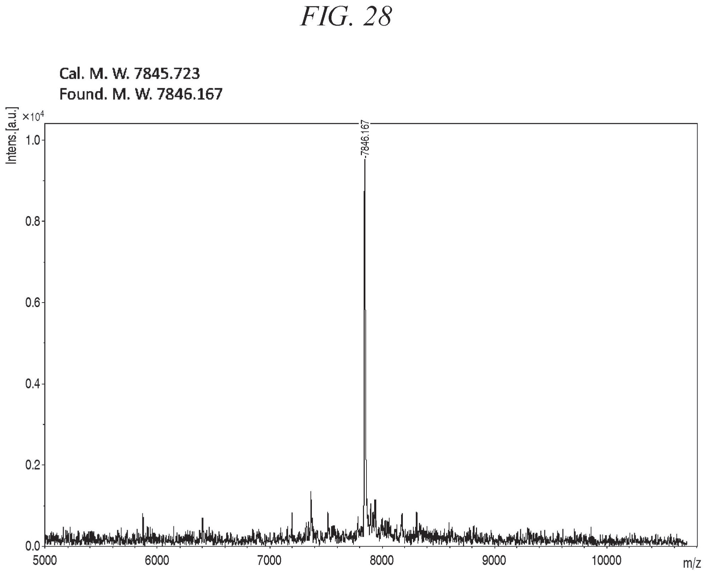

The thus obtained L-type oligomer RNA was analyzed by MALDI-TOF MS. The analysis results are shown in FIG. 28.

### (2) Synthesis of EEEA-L-(UAGGGU)₄RNA

The L-type oligomer RNA (L-(UAGGGU)₄) and the EEEA-CH₂-amidite synthesized in (1) of Example 4 were bound together using the phosphoramidite method, thus synthesizing a fluorine-containing oligomer RNA that was a fluorine-containing G4 compound (EEEA-L-(UAGGGU)₄RNA). Specifically, with the exception of using the L-(UAGGGU)₄RNA as the oligomer RNA, a purified EEEA-L-(UAGGGU)₄ RNA was obtained in the same manner as (2) of Example 4.

### (3) Effect of EEEA-L-(UAGGGU)₄RNA on PpIX Fluorescence in the Presence of RNAase

An aqueous solution prepared by adding KCl (final concentration:100 mM) and K-PO₄ (final concentration: 20 mM) to an ultrapure water that had been subjected to autoclave sterilization was used as the reaction buffer. Two samples (test groups 1 and 2) were prepared by adding the fluorine-containing oligomer RNA (EEEA-L-(UAGGGU)₄RNA) to the reaction buffer in an amount sufficient to yield a final concentration of 10 µM, and one sample (test group 3) was prepared containing only the reaction buffer.

After conducting annealing of each sample, a solution of PpIX (final concentration: 1 µM) dissolved in DMSO was added thereto. Further, RNase A was added only to the sample of test group 1. The samples were then incubated in a dry bath incubation chamber at 37°C for two hours.

The fluorescence intensity of each sample was measured one hour after and two hours after the start of incubation using an in vivo imaging system (Lumazone, manufactured by Shoshin EM Corporation). Moreover, 405 nm/625 nm filters were used as the excitation/emission filters. The fluorescence intensity was quantified using imaging software (from Intelligent Imaging Innovations Ltd.). The measurement results are shown in FIG. 29A. In the sample of test group 3 (labeled "3" in the figure), to which only PpIX had been added, almost no fluorescence was detected at either one hour after or two hours after the start of incubation. In contrast, in the samples of test groups 1 and 2, to which the EEEA-L-(UAGGGU)₄RNA had been added, strong fluorescence was observed one hour after the start of incubation, and fluorescence continued to be measured even after two hours, regardless of whether RNase A had been added or not. Based on these results, it was evident that EEEA-L-(UAGGGU)₄RNA binds to PpIX and enhances the intensity of the red fluorescence derived from PpIX, and that the EEEA-L-(UAGGGU)₄RNA exhibits resistant to RNase A, with the PpIX undergoing no decomposition, and no change in the fluorescence intensity, even in the presence of RNase A. The conditions for each test group and the fluorescence intensity results are shown in Table 2.

**[Table 2]**

| | Oligomer RNA | RNase A | Fluorescence intensity |
|---|---|---|---|
| Test group 1 | EEEA-L-(UAGGGU)₄RNA | present | Strong fluorescence observed even after 2 hours |
| Test group 2 | EEEA-L-(UAGGGU)₄RNA | none | Strong fluorescence observed even after 2 hours |
| Test group 3 | none | none | Almost none measured |

### (4) Effects of EEEA-L-(UAGGGU)₄RNA and (UAGGGU)₄RNA on PpIX Fluorescence in the Presence of RNAase

One sample (test group 1) was prepared by adding the L-type fluorine-containing oligomer RNA (EEEA-L-(UAGGGU)₄RNA) to the reaction buffer used above in (3) in an amount sufficient to yield a final concentration of 10 µM, one sample (test group 3) was prepared by adding the D-type oligomer RNA ((UAGGGU)₄RNA) to the reaction buffer used above in (3) in an amount sufficient to yield a final concentration of 10 µM, and one sample (test group 2) was prepared containing only the reaction buffer.

After conducting annealing of each sample, a solution of PpIX (final concentration: 1 µM) dissolved in DMSO was added thereto. Further, RNase A was added only to the samples of test groups 1 and 3. The samples were then incubated in a dry bath incubation chamber at 37°C for two hours.

The fluorescence intensity of each sample was measured one hour after and two hours after the start of incubation in the same manner as described above in (3). The measurement results are shown in FIG. 29B. In the sample of test group 2 (labeled "2" in the figure), to which only PpIX had been added, almost no fluorescence was detected at either one hour after or two hours after the start of incubation. In contrast, in the sample of test group 1, to which the EEEA-L-(UAGGGU)₄RNA and RNase A had been added, strong fluorescence was observed one hour after the start of incubation, and fluorescence continued to be measured even after two hours. In the sample of test group 3, to which the (UAGGGU)₄RNA and RNase A had been added, fading of the fluorescence was measured from one hour after the start of incubation, and almost no fluorescence was measured after two hours. The fading of the fluorescence in the sample of test group 3 indicates that the (UAGGGU)₄RNA was cleaved by the RNase A, making the G4 structure unstable, resulting in further decomposition of PpIX and a decrease in the fluorescence intensity. Based on these results, it was evident that EEEA-L-(UAGGGU)₄RNA binds to PpIX and enhances the intensity of the red fluorescence derived from PpIX. The conditions for each test group and the fluorescence intensity results are shown in Table 3.

**[Table 3]**

| | Oligomer RNA | RNase A | Fluorescence intensity |
|---|---|---|---|
| Test group 1 | EEEA-L-(UAGGGU)₄RNA | present | Strong fluorescence observed even after 2 hours |
| Test group 2 | none | none | Almost none measured |
| Test group 3 | (UAGGGU)₄RNA | present | Faded after 2 hours |

### [Example 7]

The compound 5-ALA and the EEEA-L-(UAGGGU)₄RNA synthesized in Example 6 were introduced into cells of the breast cancer cell line 4T1 (obtained from JCRB Cell Bank), and the fluorescence intensity in each group of cells was investigated.

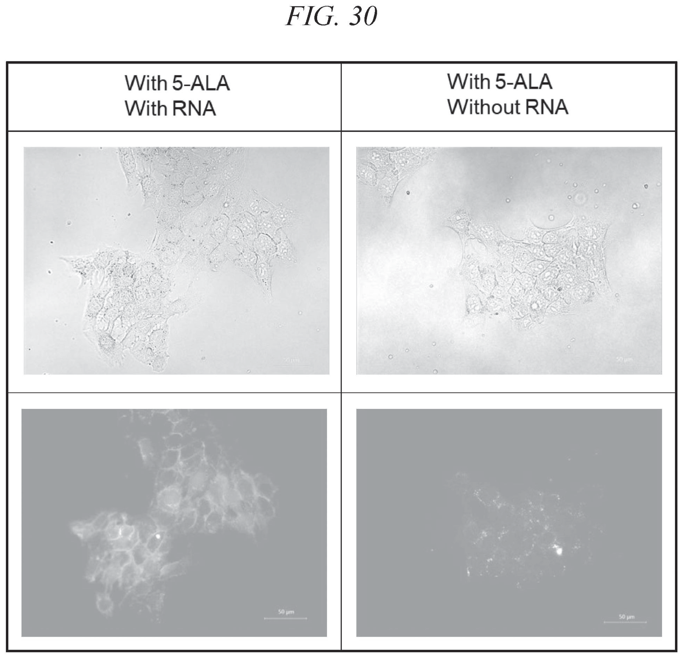

The cells were seeded in two 35 mm glass-bottom dishes at a rate of 5 × 10⁴ cells per dish, and were cultured for 24 hours to allow the cells to adhere and proliferate (pre-culture). Subsequently, 500 µM of 5-ALA was added to the culture medium of the two dishes, and culturing was continued for 21 hours. Following subsequent removal of the culture medium from each dish using an aspirator, 1 µM of EEEA-L-(UAGGGU)₄RNA was added to the culture medium of one of the two dishes (test group 1), whereas nothing was added to the remaining dish (test group 2). Subsequently, after culturing for an additional 24 hours, fluorescence images of the cells in each dish were acquired using an all-in-one fluorescence microscope using a filter excitation wavelength set to 395 to 415 nm and a detector set to a fluorescence wavelength of 625 nm to 655 nm. The microscope images of each group of cells are illustrated in FIG. 30. In FIG. 30, the upper row represents bright field images, and the lower row represents fluorescence images.

As illustrated in FIG. 30, in the cells of test group 2, to which only 5-ALA had been added, almost no red fluorescence derived from PpIX was observed. In contrast, in the cells of test group 1, to which 5-ALA was added together with EEEA-L-(UAGGGU)₄RNA, strong red fluorescence derived from PpIX was observed. These results confirmed that EEEA-L-(UAGGGU)₄RNA enhances the red fluorescence derived from PpIX accumulated in cancer cells.

### [Example 8]

The L-(UAGGGU)₄RNA synthesized in Example 6 was encapsulated in an LNP to create a complex with the LNP. The effect of the obtained L-(UAGGGU)₄RNA-containing LNP on PpIX fluorescence was investigated.

### (1) Preparation of L-(UAGGGU)₄RNA-containing LNP

An L-type oligomer RNA (L-(UAGGGU)₄RNA) was dissolved in a 50 mM sodium acetate buffer solution that had been adjusted to a pH of 5.0. An ionizable lipid, DSPC (1,2-distearoyl-sn-glycero-3-phosphocholine), cholesterol, and PEG-DMG (polyethylene glycol-modified dimyristoyl glycerol) were added to and dissolved in ethanol in a molar ratio of 50/10/38.5/1.5. The aqueous solution of the L-type oligomer RNA and the lipid ethanol solution were mixed such that the amount (mass ratio) of the L-type oligomer RNA to the total lipid amount was 0.1 (wt/wt)%. The thus obtained mixed solution was dialyzed overnight in a pH 7.4 phosphate buffer solution (PBS) using a dialysis tube (MWCO (molecular weight cutoff): 100 kD). The dialyzed LNP solution was filtered and sterilized using a 0.22 µm membrane filter, thus completing preparation of a solution containing L-(UAGGGU)₄RNA-containing LNP.

### (2) Measurement of PpIX Fluorescence Emission Spectrum

An aqueous solution prepared by adding KCl (final concentration:100 mM) and K-PO₄ (final concentration: 20 mM) to an ultrapure water that had been subjected to autoclave sterilization was used as the reaction buffer. The L-(UAGGGU)₄RNA-containing LNP or the L-type oligomer RNA (L-(UAGGGU)₄RNA was added to this reaction buffer in an amount sufficient to yield a final concentration of 10 µM (expressed as the equivalent oligomer RNA concentration in the case of the LNP), and the total sample volume was adjusted to 200 µL. A control sample was also prepared with no added RNA.

After annealing each sample, PpIX (final concentration: 1 µM) dissolved in DMSO was added thereto, and the sample was incubated at room temperature in the dark for two hours. Following incubation, each sample was placed in the cell of a fluorophotometer, and the fluorescence emission spectrum was measured using a spectrofluorometer.

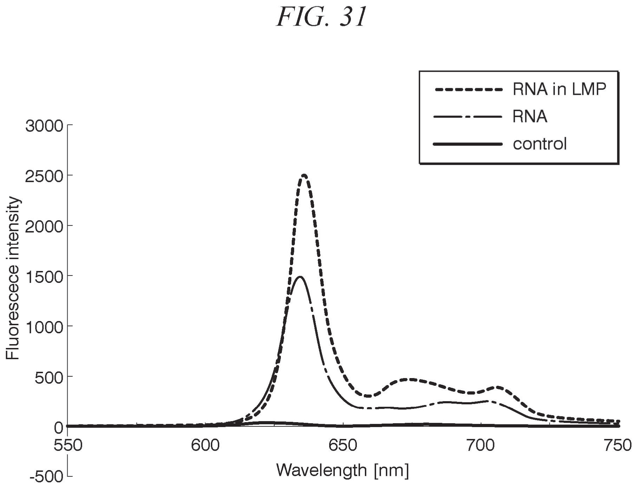

The results of the fluorescence emission spectroscopy measurements are shown in FIG. 31. In the sample containing the added L-(UAGGGU)₄RNA-containing LNP and the sample containing the added L-type oligomer RNA (L-(UAGGGU)₄RNA), a significant peak derived from PpIX was detected at a wavelength in the vicinity of 630 nm compared with the control sample containing no added RNA. Comparison of the sample containing the added L-(UAGGGU)₄RNA-containing LNP and the sample containing the added L-type oligomer RNA (L-(UAGGGU)₄RNA) revealed a more significant peak for the sample containing the added L-(UAGGGU)₄RNA-containing LNP. Based on these results, it was evident that by encapsulating the oligomer RNA in LNP to form a complex of the two substances, the fluorescence intensity derived from PpIX could be enhanced more strongly than the case of using the oligomer RNA alone.

### (3) Detection of PpIX in Breast Cancer Cells

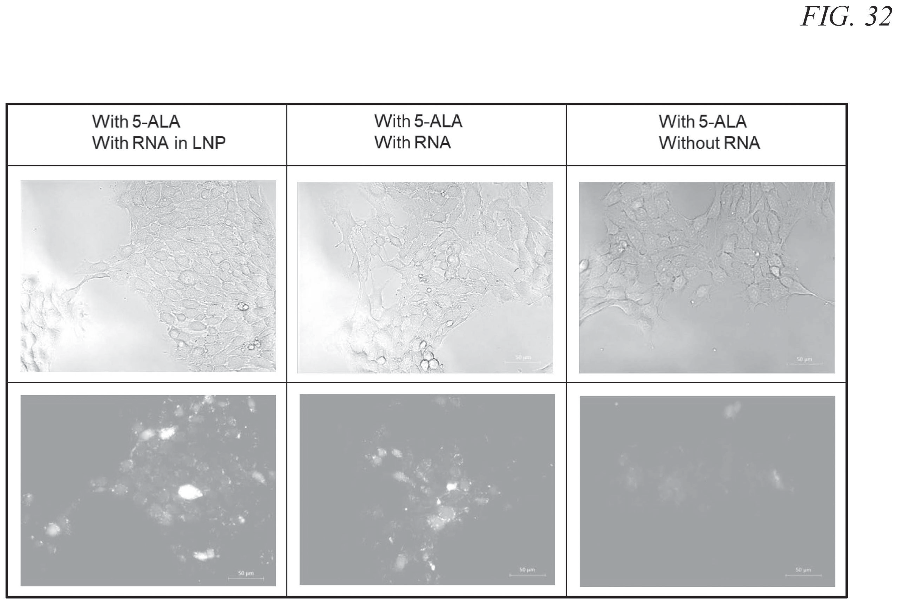

Cells were seeded in three 35 mm glass-bottom dishes at a rate of 5 × 10⁴ cells per dish, and were cultured for 24 hours to allow the cells to adhere and proliferate (pre-culture). Subsequently, 500 µM of 5-ALA was added to the culture medium of two of the three dishes (test groups 1 and 2), whereas nothing was added to the culture medium of the remaining one dish (test group 3). Subsequently, culturing was continued for 21 hours, and the culture medium was then removed from each dish using an aspirator. Next, 1 µM of the L-(UAGGGU)₄RNA-containing LNP (expressed as the equivalent oligomer RNA concentration) was added to the culture medium of one of the three dishes (test group 1), and 1 µM of L-(UAGGGU)₄RNA was added to the culture medium of another one of the three dishes (test group 2), while nothing was added to the remaining dish (test group 3). Subsequently, after culturing for an additional 24 hours, fluorescence images of the cells in each dish were acquired using an all-in-one fluorescence microscope using a filter excitation wavelength set to 395 to 415 nm and a detector set to a fluorescence wavelength of 625 nm to 655 nm. The microscope images of each group of cells are illustrated in FIG. 32. In FIG. 32, the upper row represents bright field images, and the lower row represents fluorescence images.

As illustrated in FIG. 32, in the cells of test group 3, to which only 5-ALA had been added, almost no red fluorescence derived from PpIX was observed. In contrast, in the cells of test group 1 and test group 2, to which 5-ALA was added together with either the L-(UAGGGU)₄RNA-containing LNP or L-(UAGGGU)₄RNA respectively, strong red fluorescence derived from PpIX was observed. Comparison of the cells of test group 1 and test group 2 revealed stronger red fluorescence derived from PpIX in the cells of test group 1. Based on these results, it was evident that both the L-(UAGGGU)₄RNA-containing LNP and L-(UAGGGU)₄RNA enhance the red fluorescence derived from PpIX accumulated in cancer cells, and that this enhancement of the red fluorescence derived from PpIX generated by oligomer RNA can be further enhanced by complexing the oligomer RNA with LNP.

### [Reference Example 1]

A single-stranded RNA having a G4 structure ((UAGGGU)₄) was labeled with a fluorescent substance Cy5, and the effect on PpIX fluorescence was investigated.

First, with the exception of using Cy5-CH₂-amidite instead of the EEA-CH₂-amidite, a Cy5-modified oligomer RNA was synthesized and purified in the same manner as Example 1, using the phosphoramidite method and a simple purification process using reverse-phase HPLC.

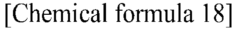

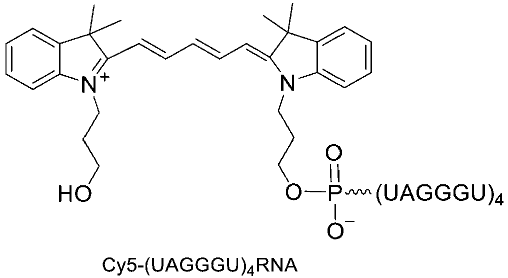

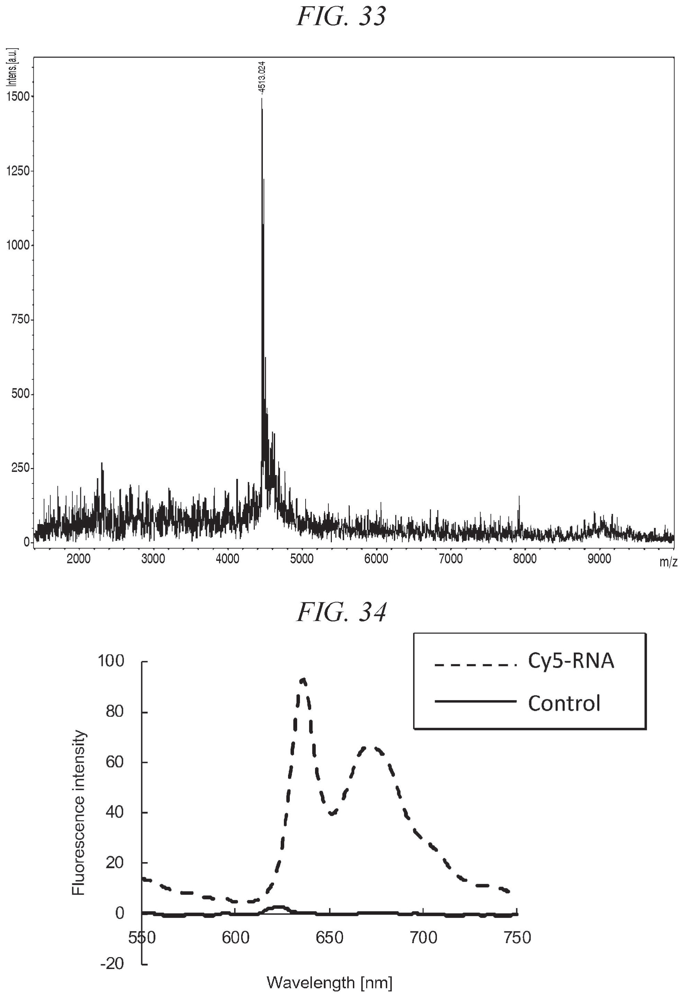

The thus obtained Cy5-modified oligomer RNA was analyzed by MALDI-TOF MS. The analysis results are shown in FIG. 33.

Using the same procedure as Example 1, the obtained Cy5-modified oligomer RNA was annealed, the oligomer was then incubated together with PpIX at room temperature in the dark for two hours, and then following incubation, the sample was placed in the cell of a fluorophotometer, and the fluorescence emission spectrum was measured using a spectrofluorometer.

The results of the fluorescence emission spectroscopy measurements are shown in FIG. 34. In the sample containing the added Cy5-modified oligomer RNA (labeled "Cy5-RNA" in the figure), a significant peak derived from PpIX was detected at a wavelength in the vicinity of 630 nm compared with the control sample containing no added RNA (labeled "Control" in the figure). In addition, a peak derived from Cy5 was also detected at a wavelength in the vicinity of 670 nm. Based on these results, it was evident that the Cy5-modified oligomer RNA enhances the fluorescence intensity derived from PpIX in a similar manner to EEA-(UAGGGU)₄RNA, and that, in addition, the Cy5 also generated emission via fluorescence resonance energy transfer (FRET).

### [Reference Example 2]

An L-type single-stranded RNA having a G4 structure ((UAGGGU)₄) was synthesized and then labeled with biotin, and the effect thereof on PpIX fluorescence was investigated.

First, with the exceptions of using an L-type oligonucleotide instead of the D-type oligonucleotide, and using a biotin-CH₂-amidite instead of the EEA-CH₂-amidite, an L-type biotin-modified oligomer RNA was synthesized and purified in the same manner as Example 1, using the phosphoramidite method and a simple purification process using reverse-phase HPLC.

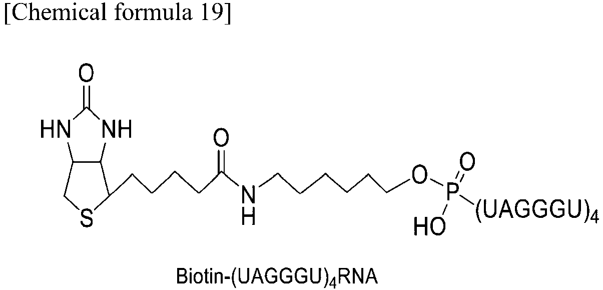

Using the same procedure as Example 1, the obtained L-type biotin-modified oligomer RNA was annealed, the resultant was then incubated together with PpIX at room temperature in the dark for two hours, and then the sample was placed in the cell of a fluorophotometer to measure the fluorescence emission spectrum using a spectrofluorometer.

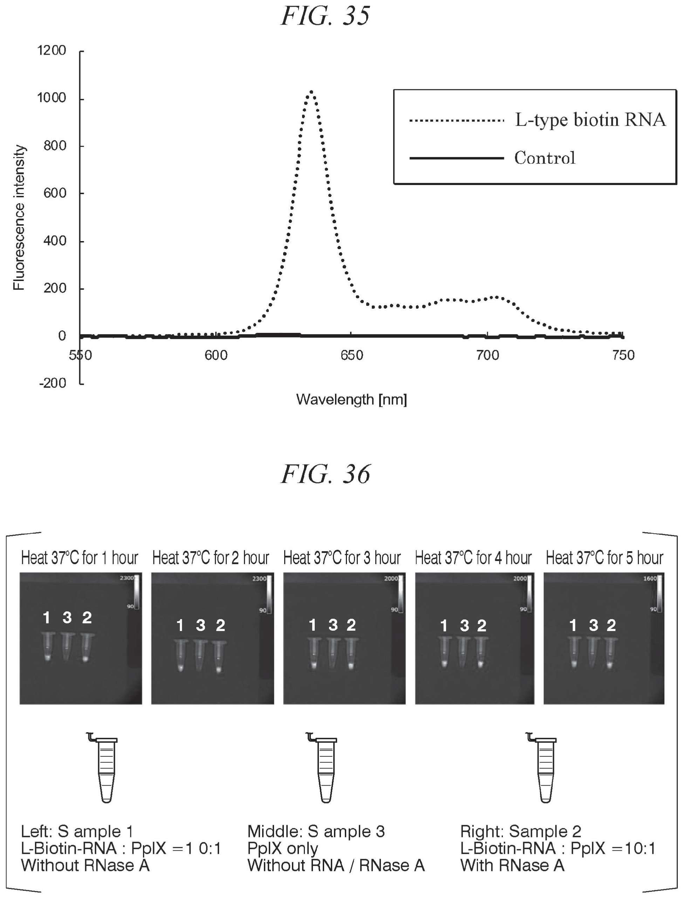

The results of the fluorescence emission spectroscopy measurements are shown in FIG. 35. In the sample containing the added L-type biotin-modified oligomer RNA (labeled "L-type biotin-RNA" in the figure), a significant peak derived from PpIX was detected at a wavelength in the vicinity of 630 nm compared with the control sample containing no added RNA (labeled "Control" in the figure). Based on these results, it was evident that the L-type biotin-modified oligomer RNA enhances the fluorescence intensity derived from PpIX.

With the exception of altering the incubation time following addition of the RNase A to one hour to five hours, the same procedure as Example 1 was used to conduct annealing of the obtained L-type biotin-modified oligomer RNA, subsequently incubate the sample together with PpIX at room temperature in the dark for two hours, add RNase A to the resultant, perform the additional period of incubation, and measure the fluorescence intensity of each sample over time. The fluorescent intensity was quantified using imaging software (from Intelligent Imaging Innovations Ltd.).

The measurement results are shown in FIG. 36. Test group 1 (labeled "1" in the figure) was a sample in which only the L-type biotin-modified oligomer RNA and PpIX were added, with no addition of the RNA-cleaving enzyme RNase A. Test group 2 (labeled "2" in the figure) was a sample in which the L-type biotin-modified oligomer RNA, PpIX and RNase A were added, and test group 3 (labeled "3" in the figure) was a sample in which only PpIX was added, with no addition of the L-type biotin-modified oligomer RNA or the RNase A. In the samples of both test group 1 and the test group 2, fluorescence was observed in the period from one hour after the start of incubation until five hours after the start of incubation. In the sample of test group 3, almost no fluorescence was able to be measured even one hour after the start of incubation. Based on these results, it was evident that the L-type biotin-modified oligomer RNA binds with the PpIX, enhancing the intensity of the red fluorescence derived from PpIX. Moreover, it was also clear that the L-type biotin-modified oligomer RNA was not decomposed by the RNase A.

### INDUSTRIAL APPLICABILITY

The present invention provides a PpIX fluorescence enhancer composed of a fluorine-containing G4 compound prepared by modifying a nucleic acid having a G4 structure with fluorine-containing groups, and a method for visualizing cancer cells that uses this fluorescence enhancer. Because the fluorescence enhancer according to the present invention exhibits an excellent stabilizing effect on the structure of PpIX and excellent cell membrane permeability, it is particularly useful for visualizing cancer cells in the bodies of animals using 5-ALA, and is expected to be used in the medical field and the biotechnology field.

## Claims

1. A protoporphyrin IX fluorescence enhancer,
comprising a nucleic acid having a G4 structure, and
bound to or complexed with a substance having cell membrane permeability.

2. The fluorescence enhancer according to Claim 1,
composed of a fluorine-containing G4 compound in which a nucleic acid having a guanine quadruplex structure and a fluorine-containing group are linked via a linking group, and
the fluorine-containing group is a perfluoroalkyl group of 1 to 10 carbon atoms having no etheric oxygen atoms between carbon atoms, or a perfluoroalkyl group of 2 to 10 carbon atoms having 1 to 5 etheric oxygen atoms between carbon atoms.

3. The fluorescence enhancer according to Claim 2, wherein
the fluorine-containing group is a group represented by general formula (F2) or (F3) shown below:
[Chemical formula 1]
-RF³-(O-CF₂-)ₙ₁-O-RF⁴ (F2)
-RF⁵-(O-CF₂-CF₂-)ₙ₂-O-RF⁶ (F3)
[wherein in the formulas, R^{F3} represents a perfluoroalkylene group having q3 carbon atoms; R^{F4} represents a perfluoroalkyl group having q4 carbon atoms; n1, q3 and q4 are natural numbers such that n1+q3+q4 is at least 3 but not more than 10; R^{F5} represents a perfluoroalkylene group having q5 carbon atoms; R^{F6} represents a perfluoroalkyl group having q6 carbon atoms; and n2, q5 and q6 are natural numbers such that 2×n2+q5+q6 is at least 4 but not more than 10].

4. The fluorescence enhancer according to Claim 2, wherein
the linking group is an alkylene group, alkenylene group, -C(=O)-, -NH-, -O-, - S-, -C(=O)-O-, -O-C(=O)-, -C(=O)NH-, -NH-C(=O)-, -NH-C(=O)-O-, -O-C(=O)-NH-, - O-P(=O)(OH)-O-, a polyethylene glycol group, or a group composed of a combination thereof.

5. The fluorescence enhancer according to Claim 2, wherein
the fluorine-containing G4 compound is a compound represented by general formula (1) shown below:
[Chemical formula 2]
R^{FE}-Z¹-G⁰ (1)
[wherein in formula (1), G⁰ represents a nucleic acid having a guanine quadruplex structure, and may be modified with a substance other than a nucleic acid; R^{FE} represents a perfluoroalkyl group of 1 to 10 carbon atoms having no etheric oxygen atoms between carbon atoms, or a perfluoroalkyl group of 2 to 10 carbon atoms having 1 to 5 etheric oxygen atoms between carbon atoms; and Z¹ represents a linking group].

6. The fluorescence enhancer according to Claim 2, wherein
the fluorine-containing G4 compound is a compound represented by general formula (2) shown below: 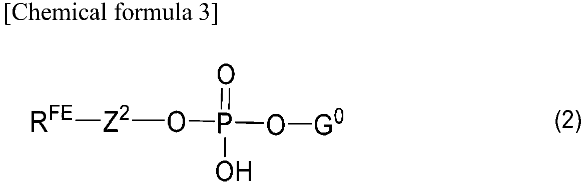 [wherein in formula (2), G⁰ represents a nucleic acid having a guanine quadruplex structure, and may be modified with a substance other than a nucleic acid; R^{FE} represents a perfluoroalkyl group of 1 to 10 carbon atoms having no etheric oxygen atoms between carbon atoms, or a perfluoroalkyl group of 2 to 10 carbon atoms having 1 to 5 etheric oxygen atoms between carbon atoms; and Z² represents a linking group].

7. The fluorescence enhancer according to Claim 1, wherein the nucleic acid having a G4 structure is complexed with a lipid nanoparticle.

8. The fluorescence enhancer according to Claim 1, wherein
the nucleic acid having a G4 structure is a nucleic acid having at least one base sequence represented by general formula (G1) shown below:
[Chemical formula 4]
5' - (Nᵣ₁GₛNᵣ₂)-3' (G1)
[wherein in formula (G1), Gₛ is a base sequence of s consecutive G (guanine) bases; s represents an integer of at least 2 but not more than 5; N represents A (adenine), C (cytosine), G (guanine), or, T (thymine) or U (uracil); Nᵣ₁ is a base sequence of r1 consecutive N bases; Nᵣ₂ is a base sequence of r2 consecutive N bases; r1 and r2 each represent integers of at least 0 but not more than 7 that satisfy 1≤r1+r2≤7; and in those cases where 2≤r1+r2≤7, a plurality of N may be bases of an identical type or bases of different types].

9. A method for producing a fluorine-containing G4 compound, the method comprising:
bonding an amidite derivative compound containing a fluorine-containing group and a nucleic acid having a guanine quadruplex structure using a phosphoramidite method, thereby synthesizing a fluorine-containing G4 compound in which the nucleic acid having a guanine quadruplex structure and the fluorine-containing group are linked via a linking group.

10. The method for producing a fluorine-containing G4 compound of Claim 9, wherein
the fluorine-containing group is a perfluoroalkyl group of 1 to 10 carbon atoms having no etheric oxygen atoms between carbon atoms, or a perfluoroalkyl group of 2 to 10 carbon atoms having 1 to 5 etheric oxygen atoms between carbon atoms.

11. A pharmaceutical composition comprising a fluorescence enhancer of any one of Claims 1 to 8 as an active ingredient.

12. A cancer cell visualization kit comprising a fluorescence enhancer of any one of Claims 1 to 8 and 5-aminolevulinic acid.

13. A cancer cell visualization method comprising introducing a fluorescence enhancer of any one of Claims 1 to 8 and 5-aminolevulinic acid into cancer cells in vitro.
